# EUROPEAN PATENT APPLICATION

(11) **EP 4 571 257 A1**
(43) Date of publication of application: **18.06.2025**
(21) Application number: 22957649.1
(22) Date of filing: 05.09.2022
(51) Int. Cl.: G01C 21/26

(54) **VEHICLE NAVIGATION METHOD AND APPARATUS, METHOD AND APPARATUS FOR ACQUIRING DRIVING REFERENCE INFORMATION, AND VEHICLE**

(71) Applicant: Shenzhen Yinwang Intelligent Technologies Co., Ltd., Shenzhen, Guangdong 518129 (CN)
(72) Inventor: QIU, Fengguang, Shenzhen, Guangdong 518129 (CN); HU, Zhaojian, Shenzhen, Guangdong 518129 (CN); AI, Zhongzheng, Shenzhen, Guangdong 518129 (CN); LIAO, Hongjian, Shenzhen, Guangdong 518129 (CN); HU, Rui, Shenzhen, Guangdong 518129 (CN); LI, Xiao, Shenzhen, Guangdong 518129 (CN); WANG, Wei, Shenzhen, Guangdong 518129 (CN)
(74) Representative: Thun, Clemens
(86) International application number: PCT/CN2022/117135
(87) International publication number: WO 2024/050675

(57) **Abstract**

A vehicle navigation method, a method for obtaining driving reference information, an apparatus, and a vehicle are provided and pertain to the field of vehicle technologies. The vehicle navigation method includes: obtaining a first traveling area of a vehicle (201), and displaying the first traveling area of the vehicle (202). The first traveling area of the vehicle is determined by a first location set that corresponds to the vehicle and that meets a first energy requirement. The first energy requirement includes at least one of the following: a one-way trip is achievable upon depletion of current remaining energy, a one-way trip is achievable upon consumption of a first proportion range of the current remaining energy, a one-way trip is achievable upon consumption to a second proportion range of the current remaining energy, a one-way trip is achievable upon replenishment of first target energy, a round trip is achievable upon depletion of the current remaining energy, a round trip is achievable upon consumption of a third proportion range of the current remaining energy, a round trip is achievable upon consumption to a fourth proportion range of the remaining energy, or a round trip is achievable upon replenishment of second target energy. According to the method, display effect of vehicle navigation is effectively improved, so that display content is more comprehensive, and a user requirement is better met, thereby improving user experience.

## Description

### TECHNICAL FIELD

This application relates to the field of vehicle technologies, and in particular, to a vehicle navigation method, a method for obtaining driving reference information, an apparatus, and a vehicle.

### BACKGROUND

With development of vehicle technologies, navigation has an increasingly wide application scope. There is also an increasingly high requirement on how to perform vehicle navigation and obtain driving reference information such as remaining energy and a range of a vehicle. The range is a range that the vehicle can travel based on the remaining energy.

### SUMMARY

This application provides a vehicle navigation method, a method for obtaining driving reference information, an apparatus, and a vehicle. A traveling area of the vehicle can be displayed according to the method.

According to a first aspect, this application provides a vehicle navigation method. The method includes: obtaining a first traveling area of a vehicle, and displaying the first traveling area of the vehicle. The first traveling area of the vehicle is determined by a first location set that corresponds to the vehicle and that meets a first energy requirement. The first energy requirement includes at least one of the following: a one-way trip is achievable upon depletion of current remaining energy, a one-way trip is achievable upon consumption of a first proportion range of the current remaining energy, a one-way trip is achievable upon consumption to a second proportion range of the current remaining energy, a one-way trip is achievable upon replenishment of first target energy, a round trip is achievable upon depletion of the current remaining energy, a round trip is achievable upon consumption of a third proportion range of the current remaining energy, a round trip is achievable upon consumption to a fourth proportion range of the remaining energy, or a round trip is achievable upon replenishment of second target energy.

According to the method, the first traveling area of the vehicle is visually displayed, so that a user (for example, a driver) can clearly view in real time a safe area within which the vehicle travels. It may be understood that the safe area is an area diagram corresponding to the first traveling area of the vehicle, and it is usually unlikely that the vehicle is unable to travel within the safe area due to insufficient energy. Therefore, according to the method, display effect of vehicle navigation is effectively improved, so that display content is more comprehensive and a user requirement is better met, thereby improving user experience. In addition, the first energy requirement is set so that a traveling area of the vehicle under the requirement can be flexibly obtained. In this way, the traveling area of the vehicle can better meet a requirement of the user.

In a possible implementation, the method further includes: obtaining a second traveling area of the vehicle, and displaying the second traveling area. The second traveling area is determined by a second location set that corresponds to the vehicle and that meets a second energy requirement. The second energy requirement includes at least one of the following: a one-way trip is achievable upon depletion of the current remaining energy, a one-way trip is achievable upon consumption of the first proportion range of the current remaining energy, a one-way trip is achievable upon replenishment of the first target energy, a round trip is achievable upon depletion of the current remaining energy, a round trip is achievable upon consumption of the second proportion range of the current remaining energy, or a round trip is achievable upon replenishment of the second target energy. The second energy requirement is different from the first energy requirement.

With the use of the first traveling area and the second traveling area of the vehicle, displayed information can be more comprehensive, thereby providing a better navigation service for the user.

In a possible implementation, display colors of the first traveling area and the second traveling area are different. Therefore, not only can a plurality of traveling areas be displayed, but also the plurality of displayed traveling areas can be clearly distinguished from each other.

In a possible implementation, the method further includes: displaying the first traveling area based on a trigger condition. The trigger condition includes at least one of the following: the current remaining energy is less than an energy threshold, a range corresponding to a current state of charge is less than a first range threshold, a remaining range of a navigation route corresponding to the vehicle is less than a second range threshold, a speed of the vehicle is less than a vehicle speed threshold, a user operation is performed, or a navigation application is started.

When the trigger condition includes at least one of the following: the current remaining energy of the vehicle is less than the energy threshold, the range corresponding to the current state of charge is less than the first range threshold, the remaining range of the navigation route corresponding to the vehicle is less than the second range threshold, the speed of the vehicle is less than the vehicle speed threshold, or the navigation application is started, the first traveling area is automatically displayed through the trigger condition. That is, the first traveling area of the vehicle is automatically displayed without any operation of the user when the foregoing trigger condition is met. When the trigger condition includes the user operation, a traveling area specified by the user can be displayed based on the user operation, so that a displayed traveling area can be flexibly adjusted, and a personalized requirement of the user is better met.

In a possible implementation, the method further includes: displaying driving reference information of the vehicle and at least one of a navigation route of the vehicle from a current location to a destination or an energy replenishment station on the navigation route. The driving reference information includes at least one of the following: a traveling area of the vehicle, a result of whether the destination is reachable, a result of whether a round trip to the destination is achievable, remaining energy or a range available upon reaching the destination, or remaining energy or a range available upon achieving a round trip to the destination.

In this way, at least one of the navigation route and the energy replenishment station on the navigation route is displayed, and the driving reference information can be displayed, so that displayed content is more comprehensive and display effect of vehicle navigation is further improved. In this way, the displayed content is more comprehensive, and a user requirement is better met, thereby improving user experience.

In a possible implementation, the method further includes: displaying a location reached upon consumption of a fifth proportion range of the current remaining energy on the navigation route. In this way, the user can visually and clearly view a real-time consumption progress of the remaining energy of the vehicle, thereby more effectively eliminating range anxiety of the user, and further improving display effect of vehicle navigation.

In a possible implementation, the result of whether the destination is reachable included in the driving reference information indicates that the destination is unreachable, or the result of whether a round trip to the destination is achievable included in the driving reference information indicates that a round trip to the destination is unachievable. In this case, a location reached upon depletion of the current remaining energy on the navigation route is further displayed. In this way, the user can visually and clearly view a location before which an energy replenishment station needs to be found for energy replenishment if the user wants to reach the destination, thereby further improving display effect of vehicle navigation.

In a possible implementation, the obtaining a first traveling area of the vehicle may be: first obtaining energy consumption impact information and current remaining energy of the vehicle, where the energy consumption impact information includes at least one of driving information, vehicle weight information, and environment information; then obtaining, based on the energy consumption impact information and the current remaining energy, the first location set that corresponds to the vehicle and that meets a first energy requirement; and obtaining the first traveling area of the vehicle by connecting a plurality of locations included in the first location set. Because the energy consumption impact information is obtained based on an actual driving environment, the first location set that corresponds to the vehicle and that meets the first energy requirement and is obtained based on the energy consumption impact information is more consistent with the actual driving environment. Therefore, the obtained first location set is more accurate and has more reference value.

In a possible implementation, when the energy consumption impact information includes the driving information, driving information corresponding to a driver's account is obtained. The driving information corresponding to the driver's account is obtained based on statistical learning for a historical driving record corresponding to the driver's account. The historical driving record includes at least one of an acceleration, a deceleration, or a traveling speed. The traveling speed includes at least one of a straight speed or a turning speed.

Because the driving information corresponding to the driver's account is obtained, when a same vehicle is driven by different drivers, accurate driving information can be obtained for different driving accounts of drivers. In this way, accuracy of the obtained driving information is improved, so that the driving information is more consistent with a current driving status, and accuracy of energy consumption impact data is improved.

In a possible implementation, a manner of obtaining the driving information corresponding to the driver's account includes: sending the driver's account to a vehicle cloud server; and receiving the driving information that corresponds to the driver's account and that is sent by the vehicle cloud server. Therefore, the driving information may be obtained by using the vehicle cloud server. Because the vehicle cloud server has a relatively strong computing capability, the driving information obtained by using the vehicle cloud server is more accurate, and a computing resource of an in-vehicle terminal is saved. The driver's account may be stored locally in the terminal. Therefore, the user may obtain the driver's account without connecting to a network when setting navigation. For example, in an area without signals such as a basement, the driver's account can still be successfully obtained, thereby improving reliability of obtaining the driving information.

In a possible implementation, when the energy consumption impact information includes the vehicle weight information, a quantity of passengers carried by the vehicle may be first obtained, and a vehicle weight increment is obtained based on the quantity of passengers and a passenger reference weight; or borne weights of all seats of the vehicle are obtained, and a vehicle weight increment is obtained based on the borne weights of all the seats; or a vehicle weight increment is obtained based on input weight information. The vehicle weight information is obtained based on the vehicle weight increment and an initial weight of the vehicle. A plurality of manners of obtaining the vehicle weight information are provided, to ensure that accurate vehicle weight information can be obtained more flexibly.

In a possible implementation, when the energy consumption impact information includes the environment information, and the environment information includes a heading direction and at least one of a wind direction and a wind strength, information about a first location on a traveling route of the vehicle may be first obtained, where the first location is any location on the traveling route. Then, at least one of the wind direction and the wind strength is obtained based on the information about the first location, and a heading direction of the vehicle at the first location is obtained based on the traveling route. Based on the information about the first location on the traveling route, the obtained environment information can match a real environment in an actual traveling process, thereby improving accuracy of the energy consumption impact information.

In a possible implementation, the obtaining, based on the energy consumption impact information and the current remaining energy, the first location set that corresponds to the vehicle and that meets the first energy requirement includes: obtaining vehicle energy consumption of the vehicle based on the energy consumption impact information, where the vehicle energy consumption includes at least one of first vehicle energy consumption, second vehicle energy consumption, and third vehicle energy consumption, the first vehicle energy consumption is determined based on the driving information, the second vehicle energy consumption is determined based on the vehicle weight information, and the third vehicle energy consumption is determined based on the environment information; and obtaining, based on the vehicle energy consumption and the current remaining energy of the vehicle, the first location set that corresponds to the vehicle and that meets the first energy requirement.

The obtained first vehicle energy consumption, second vehicle energy consumption, and third vehicle energy consumption are all obtained based on actual energy consumption impact information. Therefore, the vehicle energy consumption including at least one of the first vehicle energy consumption, the second vehicle energy consumption, and the third vehicle energy consumption can also represent actual vehicle energy consumption. That is, the obtained vehicle energy consumption is more consistent with actual vehicle energy consumption and is more accurate. Therefore, the driving reference information obtained based on the vehicle energy consumption is more accurate and has more reference value.

In a possible implementation, when the vehicle energy consumption includes the first vehicle energy consumption, and the energy consumption impact information further includes at least one of a driving mode or an energy recovery mode configured for the vehicle, the first vehicle energy consumption of the vehicle is determined based on the driving information and at least one of the driving mode and the energy recovery mode corresponding to the vehicle. Therefore, through combination of the driving information with the driving mode and the energy recovery mode, impact of a driving habit of the driver on the vehicle energy consumption is fully considered, making the obtained first vehicle energy consumption more accurate.

In a possible implementation, when the vehicle energy consumption includes the second vehicle energy consumption, a resistance of the vehicle is obtained based on the vehicle weight information, where the resistance of the vehicle includes at least one of a rolling resistance, a gradient resistance, a first air resistance, or an acceleration resistance. The second vehicle energy consumption of the vehicle is determined based on the resistance of the vehicle. Therefore, a more accurate resistance of the vehicle can be obtained based on actual vehicle weight information, so that the obtained second vehicle energy consumption is more accurate, thereby improving accuracy of the vehicle energy consumption.

In a possible implementation, when the vehicle energy consumption includes the third vehicle energy consumption, a second air resistance corresponding to the vehicle is determined based on the heading direction and at least one of the wind direction and the wind strength. The third vehicle energy consumption of the vehicle is determined based on the second air resistance. Therefore, a more accurate second air resistance can be obtained based on the heading direction and at least one of an actual wind direction and wind strength, so that the obtained third vehicle energy consumption is more accurate, thereby improving accuracy of the vehicle energy consumption.

In a possible implementation, road condition information of traveling from the current location of the vehicle to the destination may be further obtained, and then the first location set that corresponds to the vehicle and that meets the first energy requirement is obtained based on the energy consumption impact information, the current remaining energy, and the road condition information. The destination is a frequently used destination, a nearby destination, or an input target destination corresponding to the vehicle. The road condition information is further combined into a process of obtaining the driving reference information, so that the obtained driving reference information of the vehicle is more accurate.

In a possible implementation, the method further includes: obtaining energy consumption impact information and the current remaining energy of the vehicle, where the energy consumption impact information includes at least one of driving information, vehicle weight information, and environment information; and obtaining the driving reference information of the vehicle based on the energy consumption impact information and the current remaining energy. Because the energy consumption impact information is obtained based on the actual driving environment, the driving reference information obtained based on the energy consumption impact information is more consistent with the actual driving environment. Therefore, the obtained driving reference information is more accurate and has more reference value.

According to a second aspect, this application provides a method for obtaining driving reference information. The method may be performed by a terminal. The method includes: obtaining energy consumption impact information and current remaining energy of a vehicle, where the energy consumption impact information includes at least one of driving information, vehicle weight information, and environment information; and obtaining driving reference information of the vehicle based on the energy consumption impact information and the current remaining energy, where the driving reference information includes at least one of the following: a traveling area of the vehicle, a result of whether the destination is reachable, a result of whether a round trip to the destination is achievable, remaining energy or a range available upon reaching the destination, or remaining energy or a range available upon achieving a round trip to the destination.

In the method for obtaining driving reference information, because the energy consumption impact information is obtained based on the actual driving environment, the driving reference information obtained based on the energy consumption impact information is more consistent with the actual driving environment. Therefore, the obtained driving reference information is more accurate and has more reference value.

In a possible implementation, when the energy consumption impact information includes the driving information, driving information corresponding to a driver's account is obtained. The driving information corresponding to the driver's account is obtained based on statistical learning for a historical driving record corresponding to the driver's account. The historical driving record includes at least one of an acceleration, a deceleration, or a traveling speed. The traveling speed includes at least one of a straight speed or a turning speed.

Because the driving information corresponding to the driver's account is obtained, when a same vehicle is driven by different drivers, accurate driving information can be obtained for different driving accounts of drivers. In this way, accuracy of the obtained driving information is improved, so that the driving information is more consistent with a current driving status, and accuracy of energy consumption impact data is improved.

In a possible implementation, obtaining the driving information corresponding to the driver's account includes: sending the driver's account to a vehicle cloud server; and receiving the driving information that corresponds to the driver's account and that is sent by the vehicle cloud server. Therefore, the driving information may be obtained by using the vehicle cloud server. Because the vehicle cloud server has a relatively strong computing capability, the driving information obtained by using the vehicle cloud server is more accurate, and a computing resource of an in-vehicle terminal is saved. The driver's account may be locally stored in the terminal, so that the driver's account can still be obtained when there is no network connection, thereby improving reliability of obtaining the driver's account.

In a possible implementation, when the energy consumption impact information includes the vehicle weight information, a quantity of passengers carried by the vehicle may be first obtained, and a vehicle weight increment is obtained based on the quantity of passengers and a passenger reference weight; or borne weights of all seats of the vehicle are obtained, and a vehicle weight increment is obtained based on the borne weights of all the seats; or a vehicle weight increment is obtained based on input weight information. The vehicle weight information is obtained based on the vehicle weight increment and an initial weight of the vehicle. A plurality of manners of obtaining the vehicle weight information are provided, to ensure that accurate vehicle weight information can be obtained more flexibly.

In a possible implementation, when the energy consumption impact information includes the environment information, and the environment information includes a heading direction and at least one of a wind direction and a wind strength, information about a first location on a traveling route of the vehicle may be first obtained, where the first location is any location on the traveling route. Then, at least one of the wind direction and the wind strength is obtained based on the information about the first location, and a heading direction of the vehicle at the first location is obtained based on the traveling route. Based on the information about the first location on the traveling route, the obtained environment information can match a real environment in an actual traveling process, thereby improving accuracy of the energy consumption impact information.

In a possible implementation, the obtaining driving reference information of the vehicle based on the energy consumption impact information and the current remaining energy includes: obtaining vehicle energy consumption of the vehicle based on the energy consumption impact information; and obtaining the driving reference information of the vehicle based on the vehicle energy consumption and the current remaining energy of the vehicle. The vehicle energy consumption includes at least one of first vehicle energy consumption, second vehicle energy consumption, and third vehicle energy consumption, the first vehicle energy consumption is determined based on the driving information, the second vehicle energy consumption is determined based on the vehicle weight information, and the third vehicle energy consumption is determined based on the environment information.

The obtained first vehicle energy consumption, second vehicle energy consumption, and third vehicle energy consumption are all obtained based on actual energy consumption impact information. Therefore, the vehicle energy consumption including at least one of the first vehicle energy consumption, the second vehicle energy consumption, and the third vehicle energy consumption can also represent actual vehicle energy consumption. That is, the obtained vehicle energy consumption is more consistent with actual vehicle energy consumption and is more accurate. Therefore, the driving reference information obtained based on the vehicle energy consumption is more accurate and has more reference value.

In a possible implementation, when the vehicle energy consumption includes the first vehicle energy consumption, and the energy consumption impact information further includes at least one of a driving mode or an energy recovery mode configured for the vehicle, the first vehicle energy consumption of the vehicle is determined based on the driving information and at least one of the driving mode and the energy recovery mode corresponding to the vehicle. Therefore, through combination of the driving information with the driving mode and the energy recovery mode, impact of a driving habit of the driver on the vehicle energy consumption is fully considered, making the obtained first vehicle energy consumption more accurate.

In a possible implementation, when the vehicle energy consumption includes the second vehicle energy consumption, a resistance of the vehicle is obtained based on the vehicle weight information, where the resistance of the vehicle includes at least one of a rolling resistance, a gradient resistance, a first air resistance, or an acceleration resistance. The second vehicle energy consumption of the vehicle is determined based on the resistance of the vehicle. Therefore, a more accurate resistance of the vehicle can be obtained based on actual vehicle weight information, so that the obtained second vehicle energy consumption is more accurate, thereby improving accuracy of the vehicle energy consumption.

In a possible implementation, when the vehicle energy consumption includes the third vehicle energy consumption, a second air resistance corresponding to the vehicle is determined based on the heading direction and at least one of the wind direction and the wind strength. The third vehicle energy consumption of the vehicle is determined based on the second air resistance. Therefore, a more accurate second air resistance can be obtained based on the heading direction and at least one of an actual wind direction and wind strength, so that the obtained third vehicle energy consumption is more accurate, thereby improving accuracy of the vehicle energy consumption.

In a possible implementation, road condition information of traveling from a current location of the vehicle to a destination may be further obtained, and then the driving reference information of the vehicle is obtained based on the energy consumption impact information, the current remaining energy, and the road condition information. The destination is a frequently used destination, a nearby destination, or an input target destination corresponding to the vehicle. The road condition information is further combined into a process of obtaining the driving reference information, so that the obtained driving reference information of the vehicle is more accurate.

In a possible implementation, when the driving reference information is a first traveling area of the vehicle, the first location set that corresponds to the vehicle and that meets a first energy requirement may be obtained based on the energy consumption impact information and the current remaining energy; and the first traveling area of the vehicle is obtained by connecting a plurality of locations included in the first location set. The first traveling area of the vehicle is obtained by using the energy consumption impact information, so that the obtained first traveling area of the vehicle is more accurate.

In a possible implementation, the first energy requirement includes at least one of the following: a one-way trip is achievable upon depletion of the current remaining energy, a one-way trip is achievable upon consumption of a first proportion range of the current remaining energy, a one-way trip is achievable upon consumption to a second proportion range of the current remaining energy, a one-way trip is achievable upon replenishment of first target energy, a round trip is achievable upon depletion of the current remaining energy, a round trip is achievable upon consumption of a third proportion range of the current remaining energy, a round trip is achievable upon consumption to a fourth proportion range of the remaining energy, or a round trip is achievable upon replenishment of second target energy.

In a possible implementation, after the obtaining driving reference information of the vehicle based on the energy consumption impact information and the current remaining energy, the first traveling area of the vehicle is displayed. The first traveling area of the vehicle is visually displayed, so that a user (for example, a driver) can clearly view in real time a safe area within which the vehicle travels. It may be understood that the safe area is the first traveling area of the vehicle, and it is usually unlikely that the vehicle is unable to travel within the safe area due to insufficient energy. Therefore, according to the method, display effect of a navigation interface is effectively improved, so that display content is more comprehensive and a user requirement is better met, thereby improving user experience.

In a possible implementation, the driving reference information further includes a second traveling area of the vehicle. The second traveling area is determined by a second location set that corresponds to the vehicle and that meets a second energy requirement. The second energy requirement includes at least one of the following: a one-way trip is achievable upon depletion of the current remaining energy, a one-way trip is achievable upon consumption of the first proportion range of the current remaining energy, a one-way trip is achievable upon replenishment of the first target energy, a round trip is achievable upon depletion of the current remaining energy, a round trip is achievable upon consumption of the second proportion range of the current remaining energy, or a round trip is achievable upon replenishment of the second target energy. The second energy requirement is different from the first energy requirement. The method further includes: displaying the second traveling area.

In a possible implementation, display colors of the first traveling area and the second traveling area are different. According to the method, not only can a plurality of traveling areas be displayed, but also the plurality of displayed traveling areas can be clearly distinguished from each other.

In a possible implementation, displaying the first traveling area of the vehicle includes: displaying the first traveling area of the vehicle based on a trigger condition. The trigger condition includes at least one of the following: the current remaining energy is less than an energy threshold, a range corresponding to a current state of charge is less than a range threshold, a remaining range of a navigation route corresponding to the vehicle is less than the range threshold, a speed of the vehicle is less than a vehicle speed threshold, a user operation is performed, or a navigation application is started.

When the trigger condition includes at least one of the following: the current remaining energy is less than the energy threshold, the range corresponding to the current state of charge is less than the range threshold, the remaining range of the navigation route corresponding to the vehicle is less than the range threshold, the speed of the vehicle is less than the vehicle speed threshold, or the navigation application is started, the first traveling area is automatically displayed through the trigger condition. That is, the first traveling area of the vehicle is automatically displayed without any operation of the user when the trigger condition is met. When the trigger condition includes the user operation, the traveling area specified by the user can be displayed based on the user operation, so that a displayed first traveling area can be flexibly adjusted, and a personalized requirement of the user is better met.

In a possible implementation, the method further includes: displaying driving reference information of the vehicle and at least one of a navigation route of the vehicle from a current location to a destination or an energy replenishment station on the navigation route. The driving reference information includes at least one of the following: a traveling area of the vehicle, a result of whether the destination is reachable, a result of whether a round trip to the destination is achievable, remaining energy or a range available upon reaching the destination, or remaining energy or a range available upon achieving a round trip to the destination.

In this way, the driving reference information of the vehicle and at least one of the navigation route or the energy replenishment station on the navigation route are displayed, so that displayed content is more comprehensive and display effect of vehicle navigation is further improved. In this way, the displayed content is more comprehensive, and a user requirement is better met, thereby improving user experience.

In a possible implementation, the method further includes: displaying a location reached upon consumption of a fifth proportion range of the current remaining energy on the navigation route. In this way, the user can visually and clearly view a real-time consumption progress of the remaining energy of the vehicle, thereby more effectively eliminating range anxiety of the user, and further improving display effect of the navigation interface.

In a possible implementation, the result of whether the destination is reachable included in the driving reference information indicates that the destination is unreachable, or the result of whether a round trip to the destination is achievable included in the driving reference information indicates that a round trip to the destination is unachievable. In this case, a location reached upon depletion of the current remaining energy on the navigation route is displayed. In this way, the user can visually and clearly view a location before which an energy replenishment station needs to be found for energy replenishment if the user wants to reach the destination, thereby further improving effect of vehicle navigation.

According to a third aspect, this application provides a method for obtaining driving reference information. The method may be performed by a vehicle cloud server. The method includes: receiving a driver's account sent by a vehicle; obtaining driving information corresponding to the driver's account based on statistical learning for a historical driving record corresponding to the driver's account, where the historical driving record includes at least one of an acceleration, a deceleration, or a traveling speed, and the traveling speed includes at least one of a straight speed or a turning speed; and sending the driving information corresponding to the driver's account to the vehicle.

According to a fourth aspect, this application provides a vehicle navigation apparatus. The apparatus includes:
an obtaining unit, configured to obtain a first traveling area of a vehicle, where the first traveling area is determined by a first location set that corresponds to the vehicle and that meets a first energy requirement; and the first energy requirement includes at least one of the following: a one-way trip is achievable upon depletion of current remaining energy, a one-way trip is achievable upon consumption of a first proportion range of the current remaining energy, a one-way trip is achievable upon consumption to a second proportion range of the current remaining energy, a one-way trip is achievable upon replenishment of first target energy, a round trip is achievable upon depletion of the current remaining energy, a round trip is achievable upon consumption of a third proportion range of the current remaining energy, a round trip is achievable upon consumption to a fourth proportion range of the remaining energy, or a round trip is achievable upon replenishment of second target energy; and
a display unit, configured to display the first traveling area of the vehicle.

In a possible implementation, the obtaining unit is further configured to obtain a second traveling area of the vehicle. The second traveling area is determined by a second location set that corresponds to the vehicle and that meets a second energy requirement. The second energy requirement includes at least one of the following: a one-way trip is achievable upon depletion of the current remaining energy, a one-way trip is achievable upon consumption of the first proportion range of the current remaining energy, a one-way trip is achievable upon replenishment of the first target energy, a round trip is achievable upon depletion of the current remaining energy, a round trip is achievable upon consumption of the second proportion range of the current remaining energy, or a round trip is achievable upon replenishment of the second target energy. The second energy requirement is different from the first energy requirement.

The display unit is further configured to display the second traveling area.

In a possible implementation, display colors of the first traveling area and the second traveling area are different.

In a possible implementation, the display unit is further configured to display the first traveling area based on a trigger condition. The trigger condition includes at least one of the following: the current remaining energy is less than an energy threshold, a range corresponding to a current state of charge is less than a first range threshold, a remaining range of a navigation route corresponding to the vehicle is less than a second range threshold, a speed of the vehicle is less than a vehicle speed threshold, a user operation is performed, or a navigation application is started.

In a possible implementation, the display unit is further configured to display driving reference information of the vehicle and at least one of a navigation route of the vehicle from a current location to a destination or an energy replenishment station on the navigation route. The driving reference information includes at least one of the following: a traveling area of the vehicle, a result of whether the destination is reachable, a result of whether a round trip to the destination is achievable, remaining energy or a range available upon reaching the destination, or remaining energy or a range available upon achieving a round trip to the destination.

In a possible implementation, the display unit is further configured to display a location reached upon consumption of a fifth proportion range of the current remaining energy on the navigation route.

In a possible implementation, the result of whether the destination is reachable included in the driving reference information indicates that the destination is unreachable, or the result of whether a round trip to the destination is achievable included in the driving reference information indicates that a round trip to the destination is unachievable. The display unit is further configured to display a location reached upon depletion of the current remaining energy on the navigation route.

In a possible implementation, the obtaining unit is configured to: obtain energy consumption impact information and the current remaining energy of the vehicle, where the energy consumption impact information includes at least one of driving information, vehicle weight information, and environment information; obtain, based on the energy consumption impact information and the current remaining energy, the first location set that corresponds to the vehicle and that meets a first energy requirement; and obtain the first traveling area of the vehicle by connecting a plurality of locations included in the first location set.

In a possible implementation, the energy consumption impact information includes the driving information. The obtaining unit is configured to: obtain driving information corresponding to a driver's account. The driving information corresponding to the driver's account is obtained based on statistical learning for a historical driving record corresponding to the driver's account. The historical driving record includes at least one of an acceleration, a deceleration, or a traveling speed. The traveling speed includes at least one of a straight speed or a turning speed.

In a possible implementation, the energy consumption impact information includes the vehicle weight information. The obtaining unit is configured to: obtain a quantity of passengers carried by the vehicle, and obtain a vehicle weight increment based on the quantity of passengers and a passenger reference weight; or obtain borne weights of all seats of the vehicle, and obtain a vehicle weight increment based on the borne weights of all the seats; or obtain a vehicle weight increment based on input weight information; and obtain the vehicle weight information based on the vehicle weight increment and an initial weight of the vehicle.

In a possible implementation, the energy consumption impact information includes the environment information. The environment information includes a heading direction and at least one of a wind direction and a wind strength. The obtaining unit is configured to: obtain information about a first location on a traveling route of the vehicle, where the first location is any location on the traveling route; and obtain at least one of the wind direction and the wind strength based on the information about the first location, and obtain a heading direction of the vehicle at the first location based on the traveling route.

In a possible implementation, the obtaining unit is configured to: obtain vehicle energy consumption of the vehicle based on the energy consumption impact information, where the vehicle energy consumption includes at least one of first vehicle energy consumption, second vehicle energy consumption, and third vehicle energy consumption, the first vehicle energy consumption is determined based on the driving information, the second vehicle energy consumption is determined based on the vehicle weight information, and the third vehicle energy consumption is determined based on the environment information; and obtain, based on the vehicle energy consumption and the current remaining energy of the vehicle, the first location set that corresponds to the vehicle and that meets the first energy requirement.

In a possible implementation, the vehicle energy consumption includes the first vehicle energy consumption, and the energy consumption impact information further includes at least one of a driving mode or an energy recovery mode configured for the vehicle. The obtaining unit is configured to: determine the first vehicle energy consumption of the vehicle based on the driving information and at least one of the driving mode and the energy recovery mode corresponding to the vehicle.

In a possible implementation, the vehicle energy consumption includes the second vehicle energy consumption. The obtaining unit is configured to: obtain a resistance of the vehicle based on the vehicle weight information, where the resistance of the vehicle includes at least one of a rolling resistance, a gradient resistance, a first air resistance, or an acceleration resistance; and determine the second vehicle energy consumption of the vehicle based on the resistance of the vehicle.

In a possible implementation, the vehicle energy consumption includes the third vehicle energy consumption. The obtaining unit is configured to: determine, based on the heading direction and at least one of the wind direction and the wind strength, a second air resistance corresponding to the vehicle; and determine the third vehicle energy consumption of the vehicle based on the second air resistance.

In a possible implementation, the obtaining unit is further configured to: obtain road condition information of traveling from the current location of the vehicle to the destination. The destination is a frequently used destination, a nearby destination, or an input target destination corresponding to the vehicle.

The obtaining unit is configured to: obtain, based on the energy consumption impact information, the current remaining energy, and the road condition information, the first location set that corresponds to the vehicle and that meets the first energy requirement.

In a possible implementation, the obtaining unit is further configured to: obtain energy consumption impact information and the current remaining energy of the vehicle, where the energy consumption impact information includes at least one of driving information, vehicle weight information, and environment information; and obtain the driving reference information of the vehicle based on the energy consumption impact information and the current remaining energy.

According to a fifth aspect, an apparatus for obtaining driving reference information is provided. The apparatus includes:
a first obtaining unit, configured to obtain energy consumption impact information and current remaining energy of a vehicle, where the energy consumption impact information includes at least one of driving information, vehicle weight information, and environment information; and
a second obtaining unit, configured to obtain driving reference information of the vehicle based on the energy consumption impact information and the current remaining energy, where the driving reference information includes at least one of the following: a traveling area of the vehicle, a result of whether the destination is reachable, a result of whether a round trip to the destination is achievable, remaining energy or a range available upon reaching the destination, or remaining energy or a range available upon achieving a round trip to the destination.

In a possible implementation, the energy consumption impact information includes the driving information. The first obtaining unit is configured to: obtain driving information corresponding to a driver's account. The driving information corresponding to the driver's account is obtained based on statistical learning for a historical driving record corresponding to the driver's account. The historical driving record includes at least one of an acceleration, a deceleration, or a traveling speed. The traveling speed includes at least one of a straight speed or a turning speed.

In a possible implementation, the first obtaining unit is configured to: send the driver's account to a vehicle cloud server; and receive the driving information that corresponds to the driver's account and that is sent by the vehicle cloud server.

In a possible implementation, the energy consumption impact information includes the vehicle weight information. The first obtaining unit is configured to: obtain a quantity of passengers carried by the vehicle, and obtain a vehicle weight increment based on the quantity of passengers and a passenger reference weight; or obtain borne weights of all seats of the vehicle, and obtain a vehicle weight increment based on the borne weights of all the seats; or obtain a vehicle weight increment based on input weight information; and obtain the vehicle weight information based on the vehicle weight increment and an initial weight of the vehicle.

In a possible implementation, the energy consumption impact information includes the environment information. The environment information includes a heading direction and at least one of a wind direction and a wind strength. The first obtaining unit is configured to: obtain information about a first location on a traveling route of the vehicle, where the first location is any location on the traveling route; and obtain at least one of the wind direction and the wind strength based on the information about the first location, and obtain a heading direction of the vehicle at the first location based on the traveling route.

In a possible implementation, the second obtaining unit is configured to: obtain vehicle energy consumption of the vehicle based on the energy consumption impact information, where the vehicle energy consumption includes at least one of first vehicle energy consumption, second vehicle energy consumption, and third vehicle energy consumption, the first vehicle energy consumption is determined based on the driving information, the second vehicle energy consumption is determined based on the vehicle weight information, and the third vehicle energy consumption is determined based on the environment information; and obtain the driving reference information of the vehicle based on the vehicle energy consumption and the current remaining energy of the vehicle.

In a possible implementation, the vehicle energy consumption includes the first vehicle energy consumption, and the energy consumption impact information further includes at least one of a driving mode or an energy recovery mode configured for the vehicle. The second obtaining unit is configured to: determine the first vehicle energy consumption of the vehicle based on the driving information and at least one of the driving mode and the energy recovery mode corresponding to the vehicle.

In a possible implementation, the vehicle energy consumption includes the second vehicle energy consumption. The second obtaining unit is configured to: obtain a resistance of the vehicle based on the vehicle weight information, where the resistance of the vehicle includes at least one of a rolling resistance, a gradient resistance, a first air resistance, or an acceleration resistance; and determine the second vehicle energy consumption of the vehicle based on the resistance of the vehicle.

In a possible implementation, the vehicle energy consumption includes the third vehicle energy consumption. The second obtaining unit is configured to: determine, based on the heading direction and at least one of the wind direction and the wind strength, a second air resistance corresponding to the vehicle; and determine the third vehicle energy consumption of the vehicle based on the second air resistance.

In a possible implementation, the first obtaining unit is further configured to: obtain road condition information of traveling from the current location of the vehicle to the destination. The destination is a frequently used destination, a nearby destination, or an input target destination corresponding to the vehicle.

The second obtaining unit is configured to: obtain the driving reference information of the vehicle based on the energy consumption impact information, the current remaining energy, and the road condition information.

In a possible implementation, the driving reference information includes a first traveling area of the vehicle. The second obtaining unit is configured to: obtain, based on the energy consumption impact information and the current remaining energy, the first location set that corresponds to the vehicle and that meets a first energy requirement; and obtain the first traveling area by connecting a plurality of locations included in the first location set.

In a possible implementation, the first energy requirement includes at least one of the following: a one-way trip is achievable upon depletion of the current remaining energy, a one-way trip is achievable upon consumption of a first proportion range of the current remaining energy, a one-way trip is achievable upon consumption to a second proportion range of the current remaining energy, a one-way trip is achievable upon replenishment of first target energy, a round trip is achievable upon depletion of the current remaining energy, a round trip is achievable upon consumption of a third proportion range of the current remaining energy, a round trip is achievable upon consumption to a fourth proportion range of the remaining energy, or a round trip is achievable upon replenishment of second target energy.

In a possible implementation, the apparatus further includes a display unit, configured to display the first traveling area of the vehicle.

In a possible implementation, the driving reference information further includes a second traveling area of the vehicle. The second traveling area is determined by a second location set that corresponds to the vehicle and that meets a second energy requirement. The second energy requirement includes at least one of the following: a one-way trip is achievable upon depletion of the current remaining energy, a one-way trip is achievable upon consumption of the first proportion range of the current remaining energy, a one-way trip is achievable upon replenishment of the first target energy, a round trip is achievable upon depletion of the current remaining energy, a round trip is achievable upon consumption of the second proportion range of the current remaining energy, or a round trip is achievable upon replenishment of the second target energy. The second energy requirement is different from the first energy requirement.

The display unit is further configured to display the second traveling area.

In a possible implementation, display colors of the first traveling area and the second traveling area are different.

In a possible implementation, the display unit is configured to: display the first traveling area of the vehicle based on a trigger condition. The trigger condition includes at least one of the following: the current remaining energy is less than an energy threshold, a range corresponding to a current state of charge is less than a range threshold, a remaining range of a navigation route corresponding to the vehicle is less than the range threshold, a speed of the vehicle is less than a vehicle speed threshold, a user operation is performed, or a navigation application is started.

In a possible implementation, the display unit is further configured to: display the driving reference information and at least one of a navigation route of the vehicle from the current location to the destination or an energy replenishment station on the navigation route.

In a possible implementation, the display unit is further configured to display a location reached upon consumption of a fifth proportion range of the current remaining energy on the navigation route.

In a possible implementation, the result of whether the destination is reachable included in the driving reference information indicates that the destination is unreachable, or the result of whether a round trip to the destination is achievable included in the driving reference information indicates that a round trip to the destination is unachievable. The display unit is further configured to display a location reached upon depletion of the current remaining energy on the navigation route.

According to a sixth aspect, an apparatus for obtaining driving reference information is provided. The apparatus includes:
a receiving unit, configured to receive a driver's account sent by a vehicle;
an obtaining unit, configured to obtain driving information corresponding to the driver's account based on statistical learning for a historical driving record corresponding to the driver's account, where the historical driving record includes at least one of an acceleration, a deceleration, or a traveling speed, and the traveling speed includes at least one of a straight speed or a turning speed; and
a sending unit, configured to send the driving information corresponding to the driver's account to the vehicle.

According to a seventh aspect, this application provides a vehicle. The vehicle includes the vehicle navigation apparatus according to the fourth aspect, or the vehicle includes the apparatus for obtaining driving reference information according to the fifth aspect.

According to an eighth aspect, this application provides a computer device. The computer device includes a processor and a memory. The memory is configured to store a software program and a module. The processor runs or executes the software program and/or the module stored in the memory, so that the computer device is enabled to implement the method in any one of the possible implementations of the first aspect, or the computer device is enabled to implement the method in any one of the possible implementations of the second aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into a same chip, or may be separately disposed in different chips. A type of the memory and a manner in which the memory and the processor are disposed are not limited in this embodiment of this application.

Optionally, the computer device may be deployed on a public cloud to provide a vehicle navigation service or a driving reference information obtaining service.

According to a ninth aspect, this application provides a computer program (product). The computer program (product) includes computer program code. When the computer program code is run by a computer, the computer is enabled to perform the method in any one of the possible implementations of the first aspect, or the computer is enabled to perform the method in any one of the possible implementations of the second aspect.

According to a tenth aspect, this application provides a computer-readable storage medium. The computer-readable storage medium is configured to store program code executed by a processor. The program code is for implementing the method in any one of the possible implementations of the first aspect, or implementing the method in any one of the possible implementations of the second aspect, or implementing the method in any one of the possible implementations of the third aspect.

According to an eleventh aspect, a chip is provided, including a processor. The processor is configured to invoke, from a memory, instructions stored in the memory and run the instructions, so that a communication device in which the chip is mounted is enabled to perform the method in any one of the possible implementations of the first aspect, or a communication device in which the chip is mounted is enabled to perform the method in any one of the possible implementations of the second aspect, or a communication device in which the chip is mounted is enabled to perform the method in any one of the possible implementations of the third aspect.

According to a twelfth aspect, another chip is provided, including an input interface, an output interface, a processor, and a memory. The input interface, the output interface, the processor, and the memory are connected through an internal connection path. The processor is configured to execute code in the memory. When the code is executed, the processor is configured to perform the method in any one of the possible implementations of the first aspect, or the processor is configured to perform the method in any one of the possible implementations of the second aspect, or the processor is configured to perform the method in any one of the possible implementations of the third aspect.

It should be understood that, for beneficial effects achieved by the technical solutions of the third aspect to the twelfth aspect and corresponding possible implementations of the technical solutions of the third aspect to the twelfth aspect of this application, refer to the technical effects of the first aspect, the second aspect, and the corresponding possible implementations of the first aspect and the second aspect. Details are not described herein again.

### BRIEF DESCRIPTION OF DRAWINGS

FIG. 1 is a diagram of an implementation environment according to an embodiment of this application;
FIG. 2 is a flowchart of a vehicle navigation method according to an embodiment of this application;
FIG. 3 is a diagram of a first navigation interface according to an embodiment of this application;
FIG. 4 is a diagram of another second navigation interface according to an embodiment of this application;
FIG. 5 is a diagram of another second navigation interface according to an embodiment of this application;
FIG. 6 is a diagram of another second navigation interface according to an embodiment of this application;
FIG. 7 is a diagram of another second navigation interface according to an embodiment of this application;
FIG. 8 is a flowchart of a method for obtaining driving reference information according to an embodiment of this application;
FIG. 9 is a diagram of a system for obtaining driving reference information according to an embodiment of this application;
FIG. 10A, FIG. 10B, FIG. 10C, FIG. 10D, and FIG. 10E are an interworking diagram of a method for obtaining driving reference information according to an embodiment of this application;
FIG. 11 is a diagram of a vehicle navigation apparatus according to an embodiment of this application;
FIG. 12 is a diagram of an apparatus for obtaining driving reference information according to an embodiment of this application;
FIG. 13 is a diagram of a structure of a computer device according to an embodiment of this application; and
FIG. 14 is a diagram of a structure of a server according to an embodiment of this application.

### DESCRIPTION OF EMBODIMENTS

To make the objectives, technical solutions, and advantages of this application clearer, the following further describes the implementations of this application in detail with reference to the accompanying drawings.

With development of vehicle technologies, various types of vehicles have become indispensable transportation means in daily life and work. Traveling of the vehicle needs to be driven by energy, but energy that can be carried by the vehicle is limited. A new-energy vehicle powered by a battery is used as an example. Due to a limitation of a current battery technology, a range that a vehicle can travel on a single charge is limited, and charging piles have not yet been fully popularized, resulting in range anxiety among users on whether the new-energy vehicle can travel to a destination, how much a state of charge is upon reaching the destination, what is a safe area of a current state of charge, and the like. Therefore, obtaining driving reference information that can provide reference for driving the vehicle, such as remaining energy of the vehicle and a travelable range of the vehicle, is a key to ensuring normal traveling of the vehicle.

In addition, because use of navigation has become a common manner of driving a vehicle to travel, displaying the driving reference information such as the remaining energy or the range on a navigation interface is an effective means of resolving range anxiety of the user. In a related technology, a range of a current remaining energy can be displayed during vehicle navigation. However, the method in the related technology cannot meet a requirement of a user for a safe area in which the vehicle can travel, and the method in the related technology further has a problem of inaccurate prediction of remaining energy or a range.

An embodiment of this application provides a vehicle navigation method. In the method, a traveling area within which the vehicle can reach with the current remaining energy can be displayed through the navigation interface, so that content displayed on the navigation interface is more comprehensive and clearer, and a user requirement is better met. An embodiment of this application further provides a method for obtaining driving reference information. In the method, more accurate driving reference information is obtained based on energy consumption impact information, so that the traveling area of the vehicle displayed on the navigation interface is more accurate, thereby improving user experience.

The vehicle in embodiments of this application may be a vehicle that uses energy such as gasoline or diesel as engine fuel, or may be a vehicle that uses energy other than the energy such as gasoline or diesel as engine fuel. For example, the vehicle may be a gas vehicle, a fuel cell electric vehicle, a battery electric vehicle, a liquefied petroleum gas vehicle, a hydrogen vehicle, a hybrid vehicle (gasoline-gas hybrid or gasoline-electric hybrid), or a solar vehicle. Vehicles of different energy types correspond to different energy. For example, energy of a battery electric vehicle is a state of charge, and energy of hydrogen vehicle is hydrogen quantity. In embodiments of this application, energy is determined by an energy type of the vehicle, and includes but is not limited to a state of charge, hydrogen quantity, natural gas quantity, gasoline quantity, or the like. Different energy corresponds to different energy replenishment stations. In embodiments of this application, the energy replenishment station is determined based on energy, and includes but is not limited to a battery swap station, a charging pile, a hydrogen refueling station, a natural gas station, and the like.

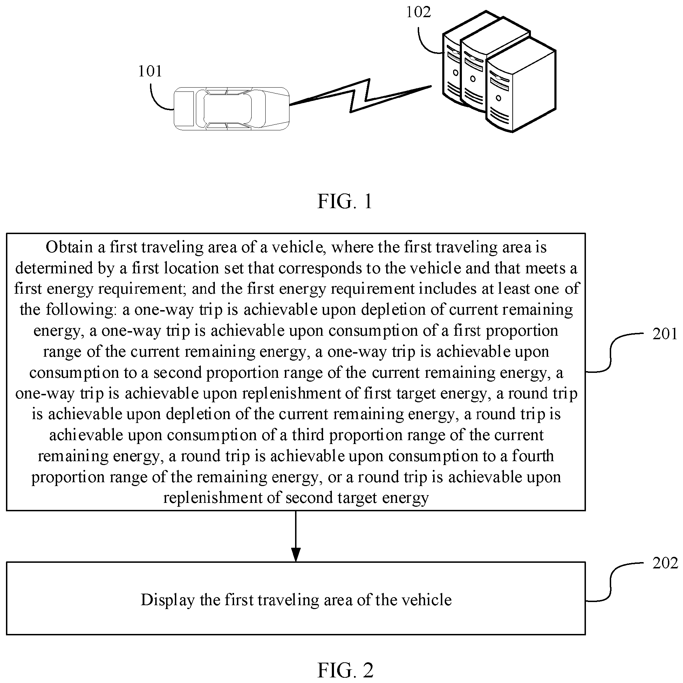

FIG. 1 is a diagram of an implementation environment according to an embodiment of this application. As shown in FIG. 1, the implementation environment includes a terminal 101 and a server 102. The terminal 101 establishes a communication connection to the server 102 through a wired or wireless network.

The terminal 101 is configured to perform the vehicle navigation method provided in embodiments of this application. Optionally, a navigation application is installed and run in the terminal 101. The navigation application provides a display interface. The display interface is used to display driving reference information on a screen of the terminal 101. The driving reference information is information that provides reference for driving a vehicle. In embodiments of this application, the driving reference information includes but is not limited to at least one of the following: a traveling area of the vehicle, a result of whether the destination is reachable, a result of whether a round trip to the destination is achievable, remaining energy or a range available upon reaching the destination, or remaining energy or a range available upon achieving a round trip to the destination. A user may obtain the driving reference information by viewing the display interface, and may further switch or adjust interface content by performing an operation such as selecting or zooming on the display interface.

In addition, the terminal 101 and the server 102 are further configured to perform the method for obtaining driving reference information provided in embodiments of this application. Optionally, the terminal 101 obtains current remaining energy and energy consumption impact information. The energy consumption impact information includes at least one of driving information, vehicle weight information, or environment information. The current remaining energy and at least one of the vehicle weight information or the environment information of the vehicle may be obtained by the terminal 101 by using a detection apparatus such as a sensor, and the driving information in the energy consumption impact information may be obtained by the terminal 101 by using the server 102. Then, the terminal 101 may obtain the driving reference information based on the energy consumption impact information and the current remaining energy. Alternatively, the terminal 101 obtains the current remaining energy and at least one of the vehicle weight information or the environment information in the energy consumption impact information, and the terminal 101 sends the current remaining energy and at least one of the vehicle weight information or the environment information in the energy consumption impact information to the server 102. The server 102 obtains the driving information in the energy consumption impact information, and obtains the driving reference information based on the energy consumption impact information and the current remaining energy, and the server 102 sends the driving reference information to the terminal 101.

When obtaining the driving information, the terminal 101 may first obtain a driver's account, and then obtain driving information corresponding to the driver's account. In this way, when a same vehicle is driven by different drivers, accurate driving information can be obtained for different driving accounts of drivers, thus improving accuracy of the obtained driving information and better adapting to a current driving status. The driver's account may be stored locally in the vehicle. Therefore, the user may obtain the driver's account without connecting to a network when setting navigation. For example, in an area without signals such as a basement, the driver's account can still be successfully obtained, thereby improving reliability of obtaining the driving information.

The terminal 101 may be any electronic product that can perform human-machine interaction with the user by using one or more of a keyboard, a touchpad, a touchscreen, a remote control, voice interaction, or a handwriting device. For example, the terminal 101 is an in-vehicle terminal (the in-vehicle terminal is used as an example in FIG. 1), a PC (Personal Computer, personal computer), a mobile phone, a smartphone, a PDA (Personal Digital Assistant, personal digital assistant), a wearable device, a PPC (Pocket PC, pocket personal computer), a tablet computer, or an intelligent on-board computer. The server 102 may be one server, or may be a server cluster including a plurality of servers, or may be a cloud computing service center. For example, the server 102 is a vehicle cloud server corresponding to an in-vehicle terminal.

A person skilled in the art should understand that the terminal 101 and the server 102 are merely examples, and another existing or future terminal or server may be applied to this application, and should also fall within the protection scope of this application and shall be included herein by reference.

FIG. 2 is a flowchart of a vehicle navigation method according to an embodiment of this application. The method may be performed by the terminal 101 shown in FIG. 1, and the terminal 101 may be an in-vehicle terminal. As shown in FIG. 2, the method includes but is not limited to the following step 201 and step 202.

Steps 201: Obtain a first traveling area of a vehicle, where the first traveling area is determined by a first location set that corresponds to the vehicle and that meets a first energy requirement; and the first energy requirement includes at least one of the following: a one-way trip is achievable upon depletion of current remaining energy, a one-way trip is achievable upon consumption of a first proportion range of the current remaining energy, a one-way trip is achievable upon consumption to a second proportion range of the current remaining energy, a one-way trip is achievable upon replenishment of first target energy, a round trip is achievable upon depletion of the current remaining energy, a round trip is achievable upon consumption of a third proportion range of the current remaining energy, a round trip is achievable upon consumption to a fourth proportion range of the remaining energy, or a round trip is achievable upon replenishment of second target energy.

In this embodiment of this application, a current location of the vehicle is used as a center. When any energy requirement is met, the vehicle can travel in different directions to reach a plurality of different locations. The plurality of locations may form a location set. A traveling area of the vehicle corresponding to the energy requirement may be obtained by connecting the plurality of locations.

The energy requirement is not limited in this embodiment of this application, and the energy requirement may be a personalized requirement of a user for energy usage in any driving scenario. For example, the energy requirement may be at least one of the following: a one-way trip is achievable upon depletion of the current remaining energy, a one-way trip is achievable upon consumption of the first proportion range of the current remaining energy, a one-way trip is achievable upon consumption to the second proportion range of the current remaining energy, a one-way trip is achievable upon replenishment of the first target energy, a round trip is achievable upon depletion of the current remaining energy, a round trip is achievable upon consumption of the third proportion range of the current remaining energy, a round trip is achievable upon consumption to the fourth proportion range of the remaining energy, or a round trip is achievable upon replenishment of the second target energy.

The first proportion range, the second proportion range, the third proportion range, and the fourth proportion range may all be flexibly adjusted. For example, the first proportion range is 70% to 90%, and the second proportion range is 90% to 100%. It may be understood that the first proportion range, the second proportion range, the third proportion range, and the fourth proportion range may alternatively be accurate percentage values. For example, the third proportion range is 70%, and the fourth proportion range is 90%. The first target energy and the second target energy may also be flexibly adjusted. For example, the first target energy may be any energy that can be replenished to the vehicle, and the second target energy may be maximum energy that can be replenished to the vehicle. The maximum energy is an energy value when the vehicle is full of energy, that is, the maximum energy that can be stored in the vehicle. For a battery electric vehicle, the maximum energy is a full-level state of charge.

For example, when the energy requirement is that a one-way trip is achievable upon depletion of the current remaining energy, for any one of the plurality of locations that meet the energy requirement, the vehicle can reach the any location upon depletion of the current remaining energy. The plurality of locations are connected to obtain a traveling area of the vehicle upon depletion of the current remaining energy. When the energy requirement is that a round trip is achievable upon depletion of the current remaining energy, for any one of the plurality of locations that meet the energy requirement, the vehicle can reach the any location and can further return to the current location from the any location upon depletion of the current remaining energy. The plurality of locations are connected to obtain a traveling area for a round trip of the vehicle upon depletion of the current remaining energy.

When the energy requirement is that a one-way trip is achievable upon consumption to the second proportion range of the current remaining energy, for any one of the plurality of locations that meet the energy requirement, the vehicle can reach the any location upon consumption to the second proportion range of the current remaining energy. The plurality of locations are connected to obtain a traveling area of the vehicle upon depletion of the current remaining energy. When the energy requirement is that a one-way trip is achievable upon replenishment of the first target energy, for any one of the plurality of locations that meet the energy requirement, the vehicle needs to find an energy replenishment station to replenish the first target energy one time in a traveling process, to reach the any location. The plurality of locations are connected to obtain a traveling area of the vehicle upon replenishment of the first target energy.

When the energy requirement is that a one-way trip is achievable upon consumption to the second proportion range of the current remaining energy, for any one of the plurality of locations that meet the energy requirement, the current remaining energy is consumed to the second proportion range when the any location is reached, regardless of the current remaining energy of the vehicle. That is, the vehicle still has the second proportion range of energy. The plurality of locations are connected to obtain a traveling area for a one-way trip upon consumption to the second proportion range of the current remaining energy. For example, the second proportion range is 20%. When a one-way trip is achievable upon consumption to the second proportion range of the current remaining energy, the vehicle has 20% remaining energy.

When the energy requirement is that a one-way trip is achievable upon consumption of the first proportion range of the current remaining energy, for any one of the plurality of locations that meet the energy requirement, the vehicle can reach the any location upon consumption of the first proportion range of the current remaining energy. The plurality of locations are connected to obtain a traveling area of the vehicle upon consumption of the first proportion range of the current remaining energy. For example, the current remaining energy is 80%, and the first proportion range is 60%. Consuming the first proportion range of the current remaining energy is consuming 60% of the current remaining energy, which is equivalent to consuming 60% of 80% on top of the 80% current remaining energy, that is, equivalent to consuming 48% energy. In this way, 32% energy remains.

There is an energy management security policy. For example, energy is a state of charge. For battery safety considerations, when the vehicle displays that the state of charge is depleted, the battery may still be in a state in which a part of state of charge is reserved, and is not completely "depleted". When the vehicle displays the electricity quantity as "depleted", the vehicle may still continue to travel a distance (for example, travel 10 kilometers). In a possible implementation, "depleted" in this embodiment of this application means that energy displayed by the vehicle is depleted. In another possible implementation, "depleted" in this embodiment of this application means that the vehicle depletes all energy and cannot continue to travel.

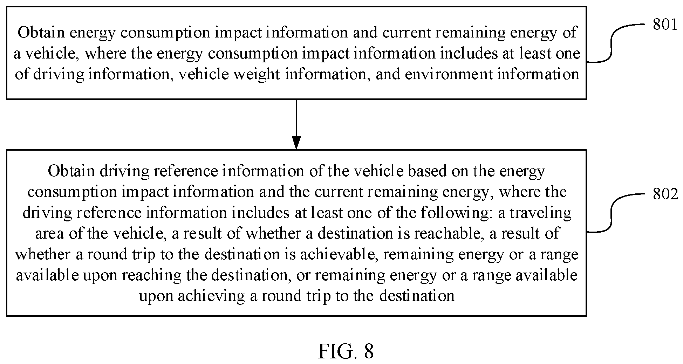

In this embodiment of this application, for a process of obtaining the traveling area of the vehicle, refer to the process of obtaining the traveling area of the vehicle in the method for obtaining driving reference information shown in FIG. 8. Details are not described herein again.

Step 202: Display the first traveling area of the vehicle.

In this embodiment of this application, because the traveling area of the vehicle can be visually displayed, the user (for example, a driver) can clearly view in real time a safe area within which the vehicle travels. It may be understood that the safe area is the traveling area of the vehicle, and it is usually unlikely that the vehicle is unable to travel within the safe area due to insufficient energy. Therefore, according to the method, display effect of vehicle navigation is effectively improved, so that display content is more comprehensive and a user requirement is better met, thereby improving user experience.

In a possible implementation, displaying the first traveling area of the vehicle may be: displaying a first navigation interface on a screen corresponding to the vehicle, and displaying the first traveling area of the vehicle through the first navigation interface. Timing for displaying the first navigation interface on the screen corresponding to the vehicle may be limited based on a trigger condition.

Optionally, the trigger condition includes at least one of the following: the current remaining energy of the vehicle is less than an energy threshold, a range corresponding to a current state of charge of the vehicle is less than a first range threshold, a remaining range of a navigation route corresponding to the vehicle is less than a second range threshold, a speed of the vehicle is less than a vehicle speed threshold, or a navigation application is started. The first range threshold, the second range threshold, and the vehicle speed threshold may all be set based on experience, or may be flexibly adjusted based on an application scenario. For example, the first range threshold and the second range threshold may be the same, both of which are 0.3 kilometer, and the vehicle speed threshold may be 15 km/h (kilometer/hour).

Automatic display of the first navigation interface is implemented based on the trigger condition. That is, no user operation is required. When the trigger condition is met, the traveling area of the vehicle is automatically displayed. For example, the trigger condition is that the navigation application is started. When the user opens the navigation application, the user does not need to input a location, and the traveling area of the vehicle is automatically displayed. In the case of automatic display, the energy requirement may be system default, or may be historically configured by a user.

Optionally, the trigger condition may further include a user operation. That is, in addition to the foregoing automatic display of the traveling area of the vehicle, the traveling area of the vehicle may be further displayed after an operation of a display request initiated by the user is received. In this case, the display request may include the energy requirement. That is, the energy requirement may be flexibly set by the user, to display an area diagram of a traveling area specified by the user. For example, a plurality of energy requirements may be set for the user for random selection. That is, the energy requirement is determined based on a user selection operation. Alternatively, the user may directly input the energy requirement. That is, the energy requirement is determined based on a user input operation. Therefore, the user can flexibly set the energy requirement, and a traveling area that meets a corresponding energy requirement can be displayed through setting of different energy requirements, so that the displayed traveling area can be flexibly adjusted, and a personalized requirement of the user is better met.

It may be understood that, based on the same method in step 201, a second traveling area of the vehicle may be further obtained. The second traveling area is determined by a second location set that corresponds to the vehicle and that meets a second energy requirement. The second energy requirement includes at least one of the following: a one-way trip is achievable upon depletion of the current remaining energy, a one-way trip is achievable upon consumption of the first proportion range of the current remaining energy, a one-way trip is achievable upon replenishment of the first target energy, a round trip is achievable upon depletion of the current remaining energy, a round trip is achievable upon consumption of the second proportion range of the current remaining energy, or a round trip is achievable upon replenishment of the second target energy. The second energy requirement is different from the first energy requirement. Optionally, the method further includes: displaying the second traveling area.

In this case, the traveling area of the vehicle includes the first traveling area and the second traveling area. The first traveling area is obtained by connecting a plurality of locations in the first location set that meets the first energy requirement, and the second traveling area is obtained by connecting a plurality of locations in the second location set that meets the second energy requirement. In this embodiment of this application, the first navigation interface is used as an example. In this case, at least one traveling area of the vehicle may be displayed through the first navigation interface, and the at least one traveling area may be separately displayed in different colors. That is, display colors of the first traveling area and the second traveling area are different. Alternatively, boundary lines of a plurality of traveling areas may be separately displayed as lines of different thicknesses. In this way, the plurality of traveling areas can be clearly distinguished from each other.

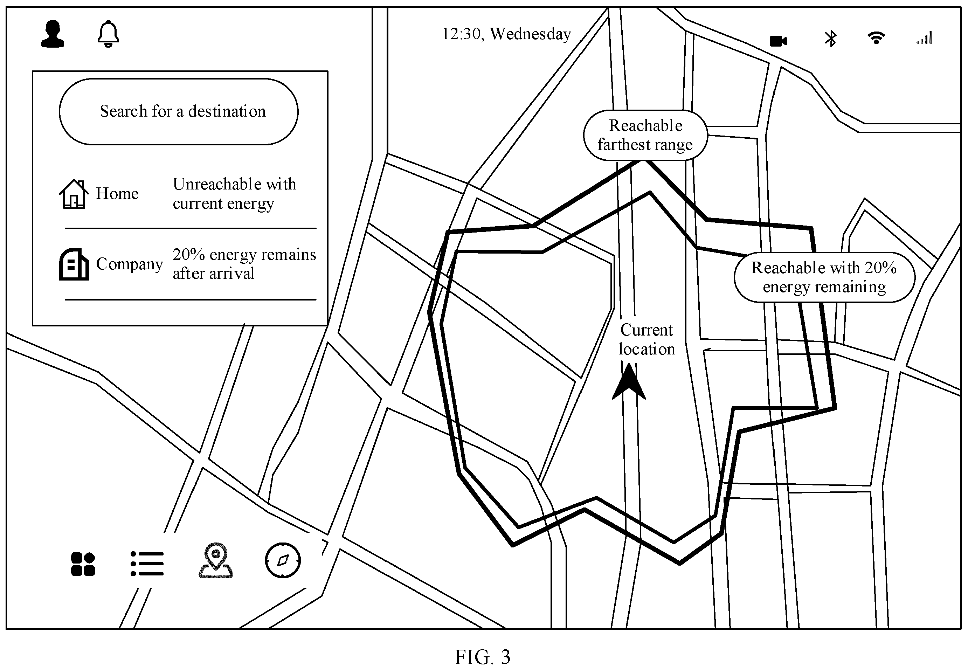

For example, FIG. 3 is a diagram of a first navigation interface according to an embodiment of this application. Two traveling areas are used as an example. FIG. 3 shows the first traveling area whose energy requirement is that a one-way trip is achievable upon depletion of the current remaining energy (that is, a farthest reachable range), and the second traveling area whose energy requirement is that a one-way trip is achievable with remaining 20% energy (that is, reachable with remaining 20% energy). A thickness of a boundary line of the first traveling area is greater than a thickness of a boundary line of the second traveling area. FIG. 3 is described by using only an example in which the first traveling area and the second traveling area have different boundary line thicknesses, but is not intended to limit this application. For example, the first traveling area and the second traveling area may be distinguished from each other by using different colors. As shown in FIG. 3, both the first traveling area and the second traveling area are irregular area diagrams centered on the current location of the vehicle. Because a shape of the area diagram is similar to a fried egg, the first navigation interface that displays the traveling area of the vehicle may also be referred to as a fried egg diagram.

In this embodiment of this application, in the foregoing scenario in which automatic display of the first navigation interface is implemented, in addition to automatic display of the traveling area of the vehicle, for any destination, at least one of a result of whether the destination is reachable, a result of whether a round trip to the destination is achievable, remaining energy or a range available upon reaching the destination, or remaining energy or a range available upon achieving a round trip to the destination may be obtained and automatically displayed. The range is a distance that the vehicle can travel upon consumption of the remaining energy. In this case, the remaining energy and the range may be mutually converted.

For example, the traveling area of the vehicle, the result of whether the destination is reachable, the result of whether a round trip to the destination is achievable, the remaining energy or the range to reach the destination, and the remaining energy or the range to achieve a round trip to the destination are collectively referred to as the driving reference information. It may be understood that, for different driving scenarios or different driving requirements, the driving reference information may further include other information that provides reference for driving the vehicle. In this embodiment of this application, for a process of obtaining the driving reference information of the vehicle, refer to the following method for obtaining driving reference information shown in FIG. 8. Details are not described herein again.

Optionally, the any destination may be a frequently used destination or a nearby destination. When the any destination is a frequently used destination, the frequently used destination may be determined based on a quantity of times the user has historically used the destination, or the frequently used destination may be a destination such as a home or a company set by the user. When the any destination is a nearby destination, the nearby destination may be a hotspot destination whose distance from the current location of the vehicle is less than a range threshold. The hotspot destination may be a shopping mall, an entertainment venue, a tourist attraction, or the like. The range threshold may be set based on experience, or may be flexibly adjusted based on different vehicles.

In this case, at least one of a result of whether the frequently used destination is reachable, a result of whether a round trip to the frequently used destination is achievable, remaining energy or a range available upon reaching the frequently used destination, or remaining energy or a range available upon achieving a round trip to the frequently used destination can also be automatically displayed without a user operation. For example, in the first navigation interface shown in FIG. 3, for a frequently used destination, namely, home, a result indicating that the destination is unreachable with current energy is displayed, and for a frequently used destination, namely, company, a result indicating that 20% energy remains after arrival is displayed.

Optionally, the any destination may be an input target destination. In this case, the user may directly input a location name of the target destination, or the user may select one of the frequently used destination or the nearby destination as the target destination. In this embodiment of this application, regardless of a manner of determining the target destination, after the target destination is determined, a second navigation interface may be further displayed on the screen corresponding to the vehicle. The driving reference information of the vehicle and at least one of a navigation route of the vehicle from the current location to the destination or an energy replenishment station on the navigation route are displayed on the second navigation interface.

In a possible implementation, when the result of whether the destination is reachable included in the driving reference information indicates that the destination is unreachable, or the result of whether a round trip to the destination is achievable included in the driving reference information indicates that a round trip to the destination is unachievable, a location reached upon depletion of the current remaining energy on the navigation route may be further displayed. For example, the location reached upon depletion of the current remaining energy on the navigation route may be further displayed through the second navigation interface. In this way, the user can visually and clearly understand a location before which an energy replenishment station needs to be found for energy replenishment if the user wants to reach the destination. Optionally, in a process in which the vehicle travels to the destination, updated driving reference information obtained after energy replenishment of the vehicle may be re-obtained and displayed based on the energy replenished to the vehicle.

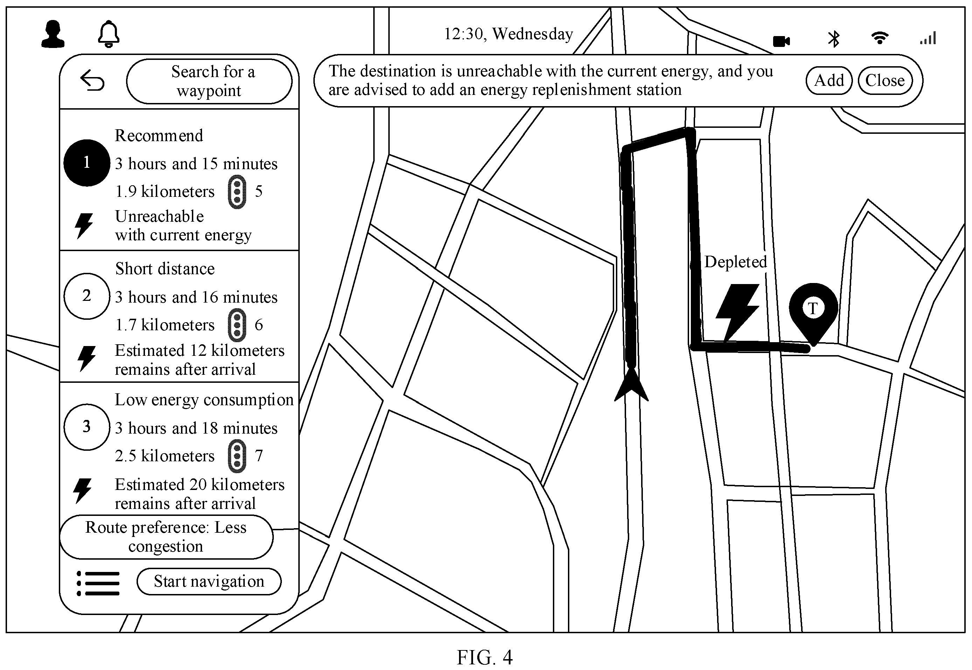

FIG. 4 is a diagram of a second navigation interface according to an embodiment of this application. It may be understood that after the target destination (namely, a terminal) is determined, a plurality of traveling routes from the current location to the terminal can be obtained by using a route planning algorithm. As shown in FIG. 4, three traveling routes from the current location to the destination are displayed on a left side of the second navigation interface. Since route preference of the user is less congestion, a traveling route map for a first recommended route is displayed on a right side. The first recommended route is a route with least congestion and has a shortest traveling time of 3 hours and 15 minutes. A total length of the route is 1.9 kilometers, and five traffic lights are passed by, but the destination is unreachable with the current energy. Therefore, a location at which the current remaining energy is depleted is shown on the traveling route map for the first recommended route.

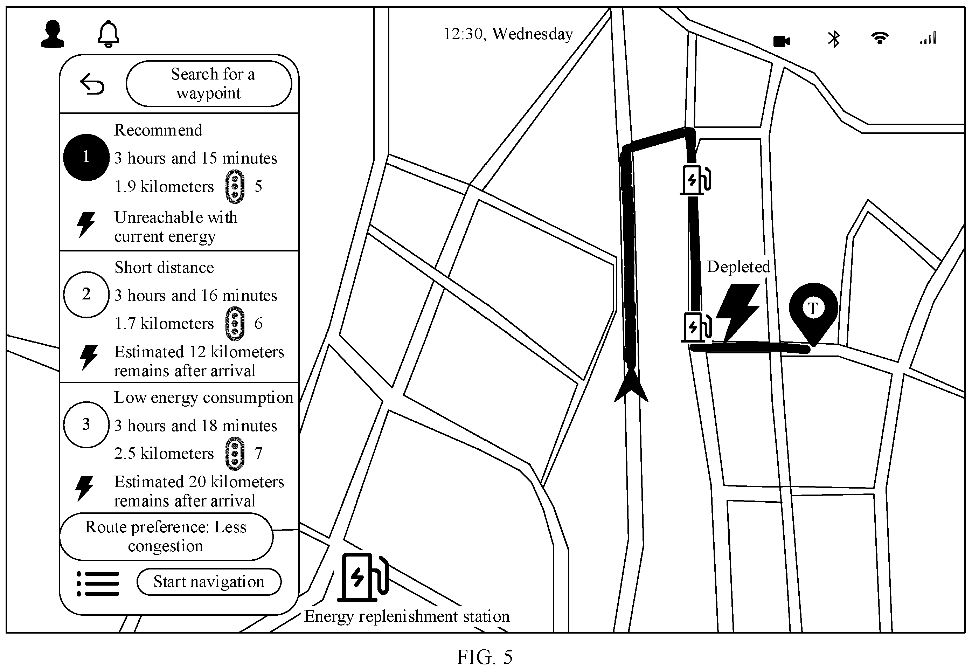

In this embodiment of this application, an upper part of FIG. 4 further displays prompt information "The destination is unreachable with the current energy, and it is recommended that a passing energy replenishment station be added". Based on a trigger operation of the user on "Add" corresponding to the prompt information, a location of a passing energy replenishment station may be further displayed on the traveling route map of the first recommended route. For example, a diagram of adding and displaying a location of a passing energy replenishment station is shown FIG. 5. FIG. 5 is a diagram of another second navigation interface according to an embodiment of this application.

In a possible implementation, when the result of whether the destination is reachable included in the driving reference information indicates that the destination is reachable, or the result of whether a round trip to the destination is achievable included in the driving reference information indicates that the round trip is achievable, a location reached upon consumption of a fifth proportion range of the current remaining energy on the navigation route may be further displayed. For example, the location reached upon consumption of the fifth proportion range of the current remaining energy on the navigation route may be further displayed through the second navigation interface. Alternatively, through conversion, a location reached upon consumption to a sixth proportion range of the current remaining energy consumption may be further displayed. The fifth proportion range and the sixth proportion range may be flexibly adjusted.

Similarly, the fifth proportion range of the current remaining energy is consumed. For example, the current remaining energy is 80%, and the fifth proportion range is 50%. Consuming the fifth proportion range of the current remaining energy is consuming 50% of the current remaining energy, which is equivalent to consuming 50% of 80% on top of the 80% current remaining energy, that is, equivalent to consuming 40% energy. In this way, 40% energy remains. Further, the remaining 40% energy may be further converted into a range that consumes the remaining 40% energy. The current remaining energy is consumed to the sixth proportion range. For example, the current remaining energy is 80%, and the sixth proportion range is 20%. That the current remaining energy is consumed to the sixth proportion range means that 20% of the energy of the vehicle remains. That is, 60% of the energy is consumed in total. The remaining 20% energy may be further converted into a range that consumes the remaining 20% energy.

For example, a location reached upon consumption of every 10% of the current remaining energy on the navigation route may be further displayed. Alternatively, a location on the navigation route at which a first range and/or a second range remain/remains may be further displayed. Optionally, both the first range and the second range may be flexibly adjusted. For example, the first range is 2 kilometers, and the second range is 0.5 kilometer. Alternatively, a location on the navigation route at which the range is reduced by one kilometer may be further displayed through the second navigation interface.

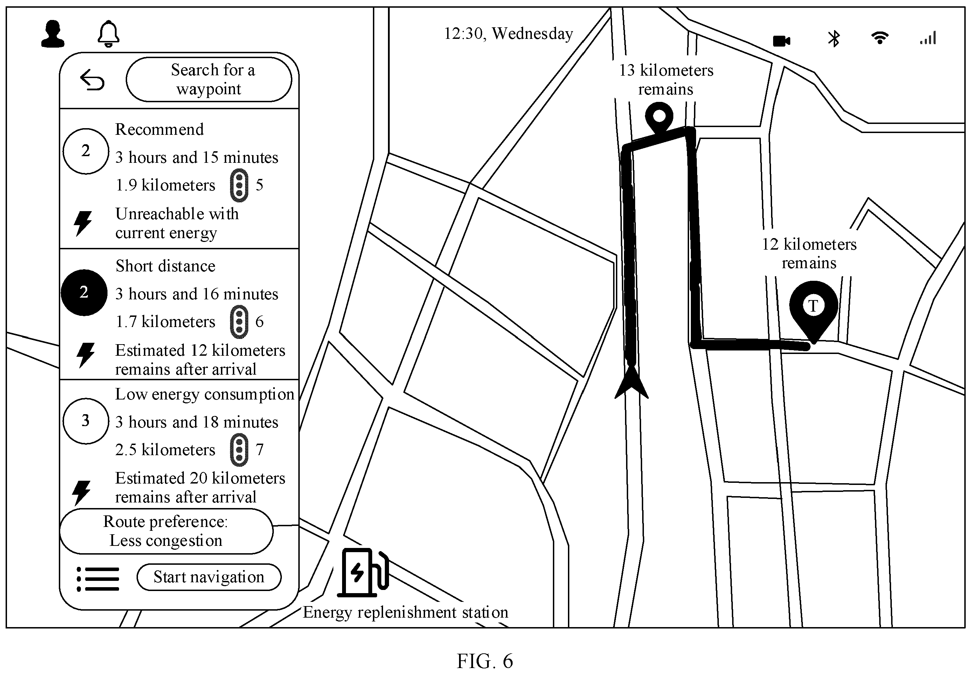

Refer to FIG. 5, when the user selects a second short-distance route shown in FIG. 5, the second navigation interface shown in FIG. 5 jumps to a second navigation interface shown in FIG. 6. As shown in FIG. 6, the second short-distance route has a shortest total length of 1.7 kilometers and has a traveling time of 3 hours and 16 minutes, six traffic lights are passed by, and it is estimated that 12 kilometers remains after arrival of the terminal with the current energy. Therefore, for example, the second navigation interface may further display a location on the navigation route at which the range is reduced by one kilometer. A traveling route map for the second short-distance route further displays a location at which 13 kilometers remains.

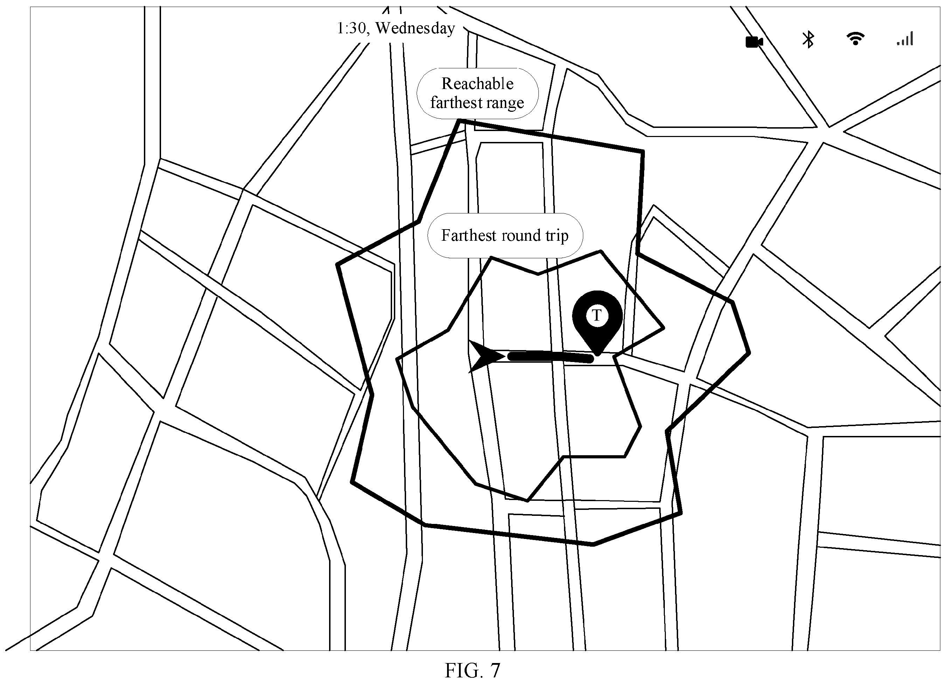

In a possible implementation, when the trigger condition is that the remaining range of the navigation route corresponding to the vehicle is less than the range threshold or is jump timing set by the user, in the second navigation interface of the traveling route shown in FIG. 6, based on the vehicle traveling to a location with a distance to the terminal less than the range threshold, a traveling area of the vehicle is further displayed through the second navigation interface, and the second navigation interface shown in FIG. 6 jumps to a second navigation interface shown in FIG. 7. As shown in FIG. 7, an example in which the energy requirement is that a one-way trip is achievable upon depletion of the current remaining energy and a round trip is achievable upon depletion of the current remaining energy is used. A third traveling area within which the vehicle can travel as far as possible and a fourth traveling area within which the vehicle can achieve a round trip to the destination as far as possible are further displayed through the second navigation interface. A thickness of a boundary line of the third traveling area is greater than a thickness of a boundary line of the fourth traveling area.

According to the vehicle navigation method provided in this embodiment of this application, a traveling area of the vehicle can be visually displayed, so that the user (for example, a driver) can clearly view in real time a safe area within which the vehicle travels. This ensures that the vehicle travels within the safe area. That is, it is unlikely that the vehicle is unable to travel due to insufficient energy. In addition to display of the traveling area of the vehicle, at least one of a result of whether the destination is reachable, a result of whether a round trip to the destination is achievable, remaining energy or a range available upon reaching the destination, or remaining energy or a range available upon achieving a round trip to the destination can be visually displayed. In this way, the user (for example, a driver) can clearly view in real time a safe area for the vehicle to travel to the destination, thereby ensuring that the vehicle can travel to the destination. Display effect of vehicle navigation is effectively improved, so that display content is more comprehensive, and a user requirement is better met, thereby improving user experience.

FIG. 8 is a flowchart of a method for obtaining driving reference information according to an embodiment of this application. The method may be performed by the terminal 101 shown in FIG. 1, and the terminal 101 may be an in-vehicle terminal. As shown in FIG. 8, the method includes but is not limited to the following step 801 and step 802.

Steps 801: Obtain energy consumption impact information and current remaining energy of a vehicle, where the energy consumption impact information includes at least one of driving information, vehicle weight information, and environment information.

In this embodiment of this application, the energy consumption impact information is information that can affect actual vehicle energy consumption in an actual driving environment. To be specific, if the energy consumption impact information changes, vehicle energy consumption changes, and changes in the vehicle energy consumption lead to changes in driving reference information such as a range within which the vehicle can travel with the current remaining energy. Therefore, the energy consumption impact information is obtained, so that the actual driving environment can be represented based on the energy consumption impact information. In this way, the driving reference information obtained based on the energy consumption impact information is more consistent with the actual driving environment. Therefore, the obtained driving reference information is more accurate.

Optionally, the energy consumption impact information includes at least one of the driving information, the vehicle weight information, and the environment information. The following separately describes manners of obtaining the driving information, the vehicle weight information, and the environment information.
(1) Obtain the driving information.

In a possible implementation, the energy consumption impact information includes the driving information. Obtaining the energy consumption impact information of the vehicle includes: obtaining driving information corresponding to a driver's account. The driving information corresponding to the driver's account is obtained based on statistical learning for a historical driving record corresponding to the driver's account. The historical driving record includes at least one of an acceleration, a deceleration, or a traveling speed. The traveling speed includes at least one of a straight speed or a turning speed.

The driving information indicates a driving habit of the driver. Optionally, the driving information may indicate aggressive driving and mild driving. A determining criterion of the driving information may be the acceleration, the deceleration, the traveling speed, or the like. It may be understood that the driving habit of the driver is a key to affecting the vehicle energy consumption. For example, if the driver is used to quick starting or emergency braking, for a same traveling route, vehicle energy consumption for driving the vehicle by the driver is greater than vehicle energy consumption for driving the vehicle by a driver with a stable driving habit. A principle is as follows: When the vehicle is accelerating, a greater acceleration indicates a greater torque force of a motor driving a wheel and higher energy consumption per unit time. When the vehicle is decelerating, a greater deceleration indicates a greater chance of triggering hydraulic or mechanical braking. However, the triggering of hydraulic or mechanical braking causes a failure to perform energy recovery, resulting in higher energy consumption per unit time. Electrical energy is used as an example of energy. Energy recovery is a process in which the vehicle converts kinetic energy into electrical energy and stores the electrical energy in a battery. Triggering energy recovery can reduce energy consumption per unit time. When a brake is slammed on, energy recovery can also be triggered. However, when a brake is slammed on, most kinetic energy is converted into heat consumption by hydraulic or mechanical braking, and only a small part of the kinetic energy is converted into electrical energy through energy recovery and stored in a battery pack. Therefore, greater recovery of energy consumption indicates that more energy consumption per unit time can be reduced.

In this embodiment of this application, the driving information corresponding to the driver's account is obtained. In this way, when a same vehicle is driven by different drivers, accurate driving information can be obtained for different driving accounts of drivers, thus improving accuracy of the obtained driving information and better adapting to a current driving status.

A manner of obtaining the driver's account of the vehicle is not limited in this embodiment of this application. For example, the driver's account may be obtained by performing an input operation by the user. Alternatively, when the vehicle perceives that there is a driver sitting on the driver's seat, a face image or a fingerprint of the driver on the driver's seat may be automatically obtained, and the driver's account is determined based on a facial recognition result of the face image. In a perceiving manner, a pressure sensor on the driver's seat may be used to perceive whether there is a driver sitting on the driver's seat of the vehicle, or an image capturing device configured to acquire image information of the driver's seat may be used to perceive whether there is a driver sitting on the driver's seat of the vehicle. Alternatively, whether there is a driver sitting on the driver's seat of the vehicle may be perceived by detecting whether a seat belt is in an in-service state.

In a possible implementation, the in-vehicle terminal is connected to a vehicle cloud server. Obtaining the driving information corresponding to the driver's account includes: sending, by the in-vehicle terminal, the driver's account to the vehicle cloud server; performing, by the vehicle cloud server, statistical learning on a historical driving record corresponding to the driver's account, determining the driving information corresponding to the driver's account, and returning the driving information to the in-vehicle terminal; and receiving, by the in-vehicle terminal, the driving information that corresponds to the driver's account and that is sent by the vehicle cloud server. Therefore, the driving information may be obtained by using the vehicle cloud server. Because the vehicle cloud server has a relatively strong computing capability, the driving information obtained by using the vehicle cloud server is more accurate, and a computing resource of the in-vehicle terminal is saved. The driver's account that is sent by the in-vehicle terminal to the vehicle cloud server may be an account stored by the in-vehicle terminal. By storing the account locally, the in-vehicle terminal can still successfully obtain the driver's account even if there is no network, thereby improving reliability of obtaining the account.

Optionally, when the driver's account is obtained through automatic perception, obtaining the driver's account of the vehicle and the driving information corresponding to the driver's account includes: sending, by the in-vehicle terminal, a face image to the vehicle cloud server; performing, by the vehicle cloud server, facial recognition on the face image to determine the driver's account, then performing statistical learning on a historical driving record corresponding to the driver's account, determining the driving information corresponding to the driver's account, and returning the driving information to the in-vehicle terminal; and receiving, by the in-vehicle terminal, the driver's account and the driving information corresponding to the driver's account that are sent by the vehicle cloud server.

In this embodiment of this application, the historical driving record used for statistical learning is not limited. The historical driving record may be all driving records corresponding to the driver's account. Alternatively, the historical driving record may be a driving record in a specified time period corresponding to the driver's account. The specified time period may be flexibly adjusted. For example, the specified time period may be a month closest to a current time. Alternatively, the historical driving record may be a specified quantity of driving records corresponding to the driver's account. The specified quantity may be flexibly adjusted. For example, the specified quantity may be 100. Similarly, a statistical learning algorithm is not limited in this embodiment of this application, and any algorithm that can implement statistical learning may be used, for example, a perceptron algorithm, a Naive Bayes algorithm, a decision tree, or a support vector machine.

(2) Obtain the vehicle weight information.

In a possible implementation, the energy consumption impact information includes the vehicle weight information. Obtaining the energy consumption impact information of the vehicle includes: obtaining a quantity of passengers carried by the vehicle, and obtaining a vehicle weight increment based on the quantity of passengers and a passenger reference weight; or obtaining borne weights of all seats of the vehicle, and obtaining a vehicle weight increment based on the borne weights of all the seats; or obtaining a vehicle weight increment based on input weight information; and obtaining the vehicle weight information based on the vehicle weight increment and an initial weight of the vehicle. The passenger reference weight may be flexibly adjusted based on a per capita weight. For example, the passenger reference weight is 60 kilograms (kg).

Because the vehicle travels through traction, and a magnitude of the traction directly affects the vehicle energy consumption, a greater traction indicates higher energy consumption, and a smaller traction indicates lower energy consumption. The vehicle weight can affect the traction. A formula for calculating the traction Ft is: Ft = (Fr + Fa + Fg) + m * du/dt. Fr represents a rolling resistance, Fa represents an air resistance (a wind resistance), Fg represents a gradient resistance, m*du/dt is an acceleration resistance, m represents the vehicle weight, and du/dt represents an acceleration. The acceleration resistance is an inertia force that maintains a constant speed of motion when the vehicle is traveling.

When the vehicle travels at a constant speed, du/dt is 0, and Ft = Fr + Fa + Fg. Fr, Fa, and Fg are all affected by the vehicle weight. The rolling resistance Fr is used as an example. Fr = f * mg. f is a rolling resistance coefficient, namely, a thrust required per unit vehicle gravity. g is a gravitational acceleration, and mg is a gravity of the vehicle. It can be seen that a greater vehicle weight indicates a greater rolling resistance and a greater traction. When the vehicle travels at a non-constant speed, the acceleration resistance m*du/dt exists. In this case, a greater vehicle weight indicates a greater traction. It can be learned that a greater traction indicates higher vehicle energy consumption. That is, when the vehicle travels at a constant speed, or when the vehicle travels with acceleration or deceleration, the vehicle weight affects the vehicle energy consumption.

Optionally, a manner of obtaining the quantity of passengers carried by the vehicle is: detecting, by using a sensor, whether a seat belt corresponding to each seat is fastened, and if the seat belt is fastened, determining that there is one passenger on the seat; or detecting, by using a pressure sensor installed under each seat, a weight of each seat, and if the weight detected by the pressure sensor is greater than 15 kg, determining that there is one passenger on the seat. In this way, a quantity of passengers can be obtained. After the quantity of passengers is obtained, the vehicle weight increment may be obtained based on the quantity of passengers and the passenger reference weight. For example, an initial vehicle weight increment is 0, and each time it is determined that one passenger is detected, the vehicle weight increment is 60 kg.

In a possible implementation, a manner of obtaining the borne weights of all the seats of the vehicle may be: detecting actual weights of all the seats by using pressure sensors installed under the seats, and using the actual weights as the borne weights of the seats. After the borne weights of all the seats are obtained, a sum of the borne weights of all the seats may be used as the vehicle weight increment. Alternatively, an actual weight of a trunk is further detected by using a pressure sensor installed under the trunk, and a sum of the borne weights on all the seats and the actual weight of the trunk is used as the vehicle weight increment. In this way, the obtained vehicle weight increment is more accurate.

(3) Obtain the environment information.

In a possible implementation, the energy consumption impact information includes the environment information. The environment information includes a heading direction and at least one of a wind direction and a wind strength. Obtaining the energy consumption impact information of the vehicle includes: obtaining information about a first location on a traveling route of the vehicle, where the first location is any location on the traveling route; and obtaining at least one of the wind direction and the wind strength based on the information about the first location, and obtaining a heading direction of the vehicle at the first location based on the traveling route.

According to the foregoing analysis process of traction, it can be learned that the air resistance is also a key factor that affects the energy consumption. A magnitude of the air resistance is affected by a relationship between the heading direction and the wind direction. That is, under a same wind strength, energy consumption when the heading direction is the same as the wind direction is less than energy consumption when the heading direction is different from the wind direction. Therefore, the heading direction and at least one of the wind direction and the wind strength can affect the vehicle energy consumption.

Optionally, when the first location is a current location of the vehicle, the current location of the vehicle may be obtained by using a global positioning system (global positioning system, GPS) installed on the vehicle, and the heading direction of the vehicle can be determined through a change of a GPS location. After the current location of the vehicle is determined, weather information corresponding to the current location may be obtained through weather software connected to the in-vehicle terminal. The weather information includes at least one of the wind direction and the wind strength, or the weather information may further include information such as snow and rain.

Optionally, when the first location is a location other than the current location of the vehicle on the traveling route, the heading direction of the vehicle at the first location may be directly determined by using a start point and an end point of the traveling route, and at least one of the wind direction and the wind strength is obtained based on weather information corresponding to the first location. It may be understood that, in a scenario in which the traveling route is a planned trip, the weather information corresponding to the first location is weather information on a planned trip day corresponding to the first location.

In conclusion, the energy consumption impact information in a corresponding situation can be obtained in the foregoing three manners. Optionally, the current remaining energy of the vehicle may be obtained by using a controller area network (controller area network, CAN) bus of the vehicle. The CAN bus is configured to implement mutual communication between various sensors and actuators in the vehicle. Therefore, a signal of a sensor that is installed at an energy storage location and that is configured to detect the remaining energy can be obtained through the CAN bus, so that the current remaining energy of the vehicle can be obtained in real time.

Steps 802: Obtain driving reference information of the vehicle based on the energy consumption impact information and the current remaining energy, where the driving reference information includes at least one of the following: a traveling area of the vehicle, a result of whether the destination is reachable, a result of whether a round trip to the destination is achievable, remaining energy or a range available upon reaching the destination, or remaining energy or a range available upon achieving a round trip to the destination.

In a possible implementation, obtaining the driving reference information of the vehicle based on the energy consumption impact information and the current remaining energy includes: obtaining vehicle energy consumption of the vehicle based on the energy consumption impact information, where the vehicle energy consumption includes at least one of first vehicle energy consumption, second vehicle energy consumption, and third vehicle energy consumption, the first vehicle energy consumption is determined based on the driving information, the second vehicle energy consumption is determined based on the vehicle weight information, and the third vehicle energy consumption is determined based on the environment information; and obtaining the driving reference information of the vehicle based on the vehicle energy consumption and the current remaining energy of the vehicle.

In this embodiment of this application, the vehicle energy consumption is total energy consumed by the vehicle per kilometer when the vehicle travels. Because the vehicle energy consumption of the vehicle is determined by a plurality of factors, the vehicle energy consumption includes at least one of the first vehicle energy consumption, the second vehicle energy consumption, and the third vehicle energy consumption. The vehicle energy consumption further includes other energy consumption, for example, load energy consumption generated by running an application such as an air conditioner, a speaker, a headlight, or a screen. An example in which the energy consumption impact information in this embodiment of this application includes at least one of the driving information, the vehicle weight information, and the environment information is used. The following describes the first vehicle energy consumption determined based on the driving information, the second vehicle energy consumption determined based on the vehicle weight information, and the third vehicle energy consumption determined based on the environment information by using an example. A manner of obtaining other energy consumption that constitutes the vehicle energy consumption is not described in this embodiment of this application.

In a possible implementation, the vehicle energy consumption includes the first vehicle energy consumption, and the first vehicle energy consumption may be directly obtained based on the driving information. Optionally, the energy consumption impact information further includes at least one of a driving mode or an energy recovery mode configured for the vehicle. Obtaining the vehicle energy consumption of the vehicle based on the energy consumption impact information includes: determining the first vehicle energy consumption of the vehicle based on the driving information and at least one of the driving mode and the energy recovery mode corresponding to the vehicle. Optionally, the driving information includes aggressive driving and mild driving.

The driving mode and the energy recovery mode also belong to driving habits. The driving mode and the energy recovery mode may be obtained based on configuration information of a user, and do not need to be learned through statistics. Optionally, the first vehicle energy consumption of the vehicle may be determined based on the driving information and at least one of the driving mode and the energy recovery mode corresponding to the vehicle based on correspondences shown in Table 1 and Table 2. In Table 1, when the energy recovery mode is strong, different driving modes, different driving information, and different vehicle speeds correspond to different first vehicle energy consumption. In Table 2, when the energy recovery mode is normal, different driving modes, different driving information, and different vehicle speeds correspond to different first vehicle energy consumption. The correspondences shown in Table 1 and Table 2 may be obtained through learning based on empirical statistics.

**Table 1**

| Energy recovery mode | Strong (strong) | | | | | | | |
|---|---|---|---|---|---|---|---|---|
| Driving mode | Economy (ECO) | | Comfort (comfort) | | Sport (sport) | | Accelerate (accelerate) | |
| Driving information | Aggressive | Mild | Aggressive | Mild | Aggressive | Mild | Aggressive | Mild |
| Speed (km/h) | Energy consumption (Wh/km, watt hour/kilometer) | | | | | | | |
| 5 | 91.0 | 88.6 | 88.3 | 86.62 | 99.8 | 96.8 | 165.41 | 158.3 |
| 10 | 88.45 | 81.4 | 79.28 | 78.3 | 85.86 | 83.6 | 151.41 | 145.3 |
| 15 | 78.03 | 76.11 | 74.49 | 72.1 | 80.67 | 78.2 | 142.26 | 136.2 |
| 20 | 74.6 | 72.50 | 73.22 | 70.3 | 86.30 | 81.15 | 139.83 | 125.3 |
| ... | ... | ... | ... | ... | ... | ... | ... | ... |

**Table 2**

| Energy recovery mode | Normal (normal) | | | | | | | |
|---|---|---|---|---|---|---|---|---|
| Driving mode | Economy (ECO) | | Comfort (comfort) | | Sport (sport) | | Accelerate (accelerate) | |
| Driving information | Aggressive | Mild | Aggressive | Mild | Aggressive | Mild | Aggressive | Mild |
| Speed (km/h) | Energy consumption (Wh/km, watt hour/kilometer) | | | | | | | |
| 5 | 87.6 | 83.0 | 89.62 | 85.3 | 98.8 | 94.8 | 168.3 | 162.41 |
| 10 | 80.4 | 77.45 | 77.28 | 72.3 | 81.86 | 80.6 | 148.4 | 141.3 |
| 15 | 74.2 | 70.03 | 72.49 | 68.1 | 78.67 | 74.2 | 139.50 | 131.2 |
| 20 | 71.1 | 69.50 | 69.22 | 64.3 | 71.30 | 66.15 | 137.12 | 120.3 |
| ... | ... | ... | ... | ... | ... | ... | ... | ... |

Therefore, through combination of the driving information with the driving mode and the energy recovery mode, impact of a driving habit of the driver on the vehicle energy consumption is fully considered, making the obtained first vehicle energy consumption more accurate.

In a possible implementation, the vehicle energy consumption includes the second vehicle energy consumption. Obtaining the vehicle energy consumption of the vehicle based on the energy consumption impact information includes: obtaining a resistance of the vehicle based on the vehicle weight information, where the resistance of the vehicle includes at least one of a rolling resistance, a gradient resistance, a first air resistance, or an acceleration resistance; and determining the second vehicle energy consumption of the vehicle based on the resistance of the vehicle. Therefore, a more accurate resistance of the vehicle can be obtained based on actual vehicle weight information, so that the obtained second vehicle energy consumption is more accurate, thereby improving accuracy of the vehicle energy consumption.

For example, an actual vehicle weight m' is determined based on the vehicle weight information, and the actual vehicle weight m' is used to replace the vehicle weight m in the formula for calculating the traction in step 201, so that at least one of a more accurate rolling resistance, gradient resistance, first air resistance, or acceleration resistance is obtained based on the actual vehicle weight m'. It may be understood that, because a parameter value of the vehicle weight is corrected, the traction can be corrected to some extent provided that any one of the rolling resistance, the gradient resistance, the first air resistance, or the acceleration resistance is obtained, so that the obtained traction is more accurate, and the obtained second vehicle energy consumption is more accurate.

In a possible implementation, the vehicle energy consumption includes the third vehicle energy consumption. Obtaining the vehicle energy consumption of the vehicle based on the energy consumption impact information includes: determining, based on the heading direction and at least one of the wind direction and the wind strength, a second air resistance corresponding to the vehicle; and determining the third vehicle energy consumption of the vehicle based on the second air resistance. Therefore, a more accurate second air resistance can be obtained based on the heading direction and at least one of an actual wind direction and wind strength, so that the obtained third vehicle energy consumption is more accurate, thereby improving accuracy of the vehicle energy consumption.

For example, refer to the formula for calculating the traction in step 201. The air resistance Fa = C * A * u²/2. C represents a drag coefficient, A represents a windward area, and u represents a vehicle speed. In this way, at least one of an actual drag coefficient C' or an actual windward area A' can be determined based on the heading direction and at least one of the wind direction and the wind strength, and the obtained second air resistance can be corrected based on at least one of the actual drag coefficient C' or the actual windward area A', so that the obtained second air resistance is more accurate, and the obtained third vehicle energy consumption is more accurate.

In this embodiment of this application, the obtained first vehicle energy consumption, second vehicle energy consumption, and third vehicle energy consumption are all obtained based on actual energy consumption impact information. Therefore, the vehicle energy consumption including at least one of the first vehicle energy consumption, the second vehicle energy consumption, and the third vehicle energy consumption can also represent actual vehicle energy consumption. That is, the obtained vehicle energy consumption is more consistent with actual vehicle energy consumption and is more accurate.

Optionally, after the vehicle energy consumption of the vehicle is obtained, the driving reference information of the vehicle may be obtained based on the vehicle energy consumption and the current remaining energy of the vehicle. A unit of the current remaining energy is watt-hour, and a unit of the vehicle energy consumption of the vehicle is watt-hour per kilometer. In this case, the current remaining energy is divided by the vehicle energy consumption of the vehicle, to obtain a range corresponding to the current remaining energy. A unit of the range is kilometer. A relationship between the range and a distance from the current location to the destination is determined, so that the driving reference information may be determined. Alternatively, the distance from the current location to the destination is determined, and then the vehicle energy consumption of the vehicle is multiplied by the distance to obtain energy required for reaching the destination. A relationship between the required energy and the current remaining energy is determined, and the driving reference information may also be determined.

For example, the driving reference information includes the result of whether the destination is reachable. If the range corresponding to the current remaining energy is less than the distance from the current location to the destination, the result of whether the destination is reachable included in the driving reference information indicates that the destination is unreachable. If the range corresponding to the current remaining energy is greater than or equal to the distance from the current location to the destination, the result of whether the destination is reachable included in the driving reference information indicates that the destination is reachable.

For example, the driving reference information includes the result of whether a round trip to the destination is achievable. Because vehicle energy consumption for traveling back and forth in two directions is different, first required energy for traveling to a destination direction and second required energy for returning to a current location direction may be obtained first. If a sum of the first required energy and the second required energy is greater than the current remaining energy, the result of whether a round trip to the destination is achievable included in the driving reference information indicates that a round trip to the destination is unachievable. If a sum of the first required energy and the second required energy is less than or equal to the current remaining energy, the result of whether a round trip to the destination is achievable included in the driving reference information indicates that a round trip to the destination is achievable.

In a possible implementation, the driving reference information includes a first traveling area of the vehicle. Obtaining the driving reference information of the vehicle based on the energy consumption impact information and the current remaining energy includes: obtaining, based on the energy consumption impact information and the current remaining energy, the first location set that corresponds to the vehicle and that meets the first energy requirement; and obtaining the first traveling area by connecting a plurality of locations included in the first location set. The first energy requirement includes at least one of the following: a one-way trip is achievable upon depletion of the current remaining energy, a one-way trip is achievable upon consumption of a first proportion range of the current remaining energy, a one-way trip is achievable upon consumption to a second proportion range of the current remaining energy, a one-way trip is achievable upon replenishment of first target energy, a round trip is achievable upon depletion of the current remaining energy, a round trip is achievable upon consumption of a third proportion range of the current remaining energy, a round trip is achievable upon consumption to a fourth proportion range of the remaining energy, or a round trip is achievable upon replenishment of second target energy.

It may be understood that, for a case in which the energy requirement includes a case that a one-way trip is achievable upon depletion of the current remaining energy, a manner of obtaining each destination is the same as a principle of the foregoing manner of obtaining the result of whether a round trip to the destination is achievable. For a case in which the energy requirement includes a case that a one-way trip is achievable upon consumption of the first proportion range of the current remaining energy, the current remaining energy in the foregoing obtaining manner is replaced with the first proportion range of the current remaining energy. Similarly, for a case in which the energy requirement includes a case that a one-way trip is achievable upon replenishment of the first target energy, the current remaining energy in the foregoing obtaining manner is replaced with a sum of the current remaining energy and the first target energy. Similarly, for a case in which a round trip is achievable upon depletion of the current remaining energy, a round trip is achievable upon consumption of the second proportion range of the current remaining energy, or a round trip is achievable upon replenishment of the second target energy, reference may also be made to the foregoing obtaining manner. Details are not described again.

In a possible implementation, the destination may be a common destination, a nearby destination, or an input target destination corresponding to the vehicle. Refer to content in step 201. When the driving reference information is obtained for any destination, the method further includes: obtaining road condition information of traveling from the current location of the vehicle to the destination. Obtaining the driving reference information of the vehicle based on the energy consumption impact information and the current remaining energy includes: obtaining the driving reference information of the vehicle based on the energy consumption impact information, the current remaining energy, and the road condition information. In this way, the road condition information is further combined into a process of obtaining the driving reference information, so that the obtained driving reference information of the vehicle is more accurate.

The road condition information includes information indicating a congestion degree of a road, and the like. In an immediate travel scenario, the road condition information is real road condition information between the current location of the vehicle and the destination, and road condition information released in real time may be obtained by using the vehicle cloud server. In a planned travel scenario, the road condition information may be future road condition information obtained through estimation based on historical road condition information. A manner of estimating the future road condition information is not limited in this embodiment of this application. For example, the vehicle cloud server can collect historical road condition information corresponding to each road, and then separately perform statistical learning on a large amount of historical road condition information corresponding to each road, to predict future road condition information corresponding to each road. The in-vehicle terminal may obtain the future road condition information by using the vehicle cloud server. Further, the vehicle cloud server may further divide different time periods based on characteristics of the large amount of historical road condition information corresponding to each road, to predict the future road condition information corresponding to each road in a corresponding time period.

Optionally, in this case, obtaining the driving reference information of the vehicle based on the energy consumption impact information, the current remaining energy, and the road condition information includes: obtaining the vehicle energy consumption of the vehicle based on the energy consumption impact information and the road condition information, where the vehicle energy consumption also includes at least one of the first vehicle energy consumption, the second vehicle energy consumption, and the third vehicle energy consumption, the first vehicle energy consumption is determined based on the driving information and the road condition information, the second vehicle energy consumption is determined based on the vehicle weight information and the road condition information, and the third vehicle energy consumption is determined based on the environment information and the road condition information; and obtaining the driving reference information of the vehicle based on the vehicle energy consumption and the current remaining energy of the vehicle.

It may be understood that a plurality of road sections may be included between traveling from the current location of the vehicle to the destination, and road condition information corresponding to each road section is different. In this case, the road condition information corresponding to each road section may be obtained based on the road section, and then required energy corresponding to the road section is obtained based on the energy consumption impact information and the road condition information corresponding to the road section, thereby obtaining the driving reference information of the vehicle based on required energy respectively corresponding to the plurality of road sections and the current remaining energy.

In a possible implementation, because the energy consumption impact information may change in real time, the terminal may obtain the energy consumption impact information in real time, and obtain corresponding driving reference information in real time based on the obtained energy consumption impact information and the current remaining energy, to update the driving reference information in real time and ensure real-time accuracy of the driving reference information.

In this embodiment of this application, after the driving reference information of the vehicle is obtained, the driving reference information of the vehicle may be further displayed on a screen corresponding to the vehicle through a navigation interface. Optionally, for a manner of displaying the driving reference information, refer to the method for displaying the first navigation interface and the second navigation interface in the vehicle navigation method shown in FIG. 2. Details are not described herein again.

According to the method for obtaining driving reference information provided in this embodiment of this application, because the energy consumption impact information is obtained based on the actual driving environment, the driving reference information obtained based on the energy consumption impact information is more consistent with the actual driving environment. Therefore, the obtained driving reference information is more accurate and has more reference value.

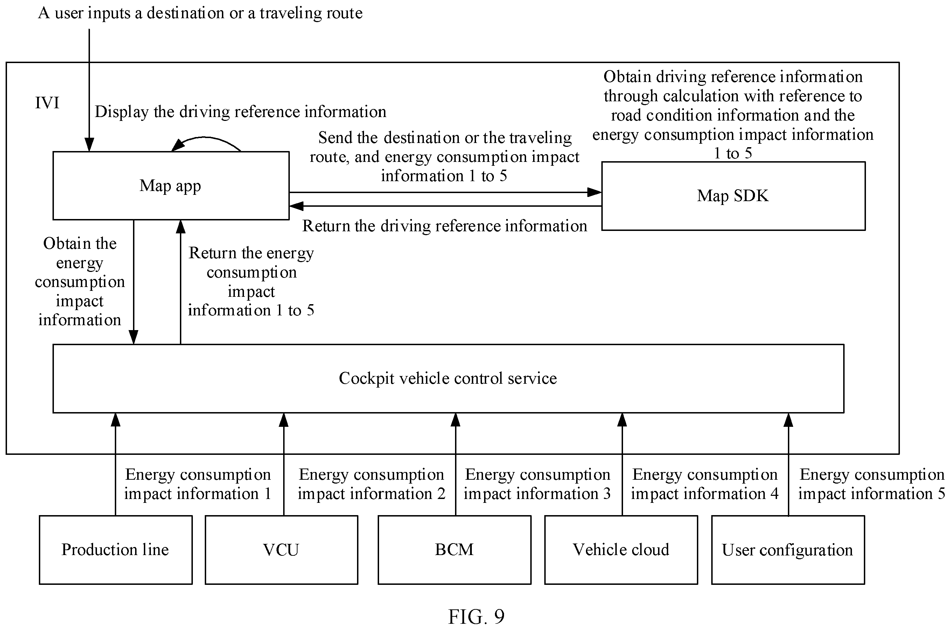

The vehicle navigation method or the method for obtaining driving reference information provided in embodiments of this application may be applied to a plurality of different system architectures. The following uses FIG. 9 as an example to describe the system architecture in embodiments of this application. As shown in FIG. 9, the system architecture includes an in-vehicle infotainment system (in vehicle infotainment, IVI), a vehicle control module (vehicle control unit, VCU), a body control module (body control module, BCM), a production line, user configuration, and a vehicle cloud. The IVI includes a cockpit vehicle control service, a map application (Application, APP), a map software development kit (software development kit, SDK), and the like. The vehicle cloud corresponds to the server 102 shown in FIG. 1, and the IVI corresponds to the terminal 101 shown in FIG. 1.

The IVI is used for human-computer interaction, receiving and storing energy consumption impact information, and obtaining driving reference information based on the energy consumption impact information, current remaining energy, and road condition information. The IVI includes a corresponding screen, namely, a central control panel of the vehicle, and is configured to display a traveling route and driving reference information on a navigation interface.

A system-on-chip (system on chip, SoC) is an internal chip of the IVI. The SoC is used to run various software, including a vehicle control service layer and various vehicle control apps. The vehicle control app is a generic term for various apps in the vehicle, for example, a map app or a navigation app in embodiments of this application. The vehicle control service layer is used to encapsulate various atomic functions of the vehicle and provide the various atomic functions to the vehicle control app for use. The atomic functions include various vehicle control services, automatic vehicle locking, air conditioning (including setting of internal or external circulation), a chassis, an Internet of Vehicles (telematics box, T-box), and the like. The chassis is one of the parts of the vehicle, and is used to control a function such as an electrical parking brake (electrical parking brake, EPB) system and a gear. The T-box is configured to provide external cellular communication for the vehicle, to connect to the vehicle cloud server.

A microcontroller unit (micro controller unit, MCU) is another chip inside the IVI. The MCU is used to encapsulate a communication signal between the IVI and another part of the vehicle, for example, a controller domain network (controller area network, CAN) signal or an Ethernet (Ethernet, ETH) signal. Optionally, the current remaining energy is obtained based on the CAN signal, and a destination, route information, or the like input by a user is obtained based on the ETH signal.

The production line is factory information in a vehicle production process, and energy consumption impact information 1 such as energy consumption at a constant speed, energy consumption at a slope, basic vehicle weight, and maximum energy may be obtained based on the production line. The VCU is configured to manage energy of the vehicle. Load energy consumption for running an application by the vehicle, for example, load energy consumption of an air conditioner, a speaker, a headlight, or a screen, namely, energy consumption impact information 2, may be obtained by using the VCU. The BCM is configured to control a seat, a door, a window, a charging port cover, a fuel filler port cover, a wiper, a rear view mirror, power-on, power-off, and the like. Energy consumption impact information 3 such as vehicle weight information may be obtained by using the BCM. The vehicle cloud is used for background calculation. For example, statistical learning is performed on a historical driving record, and energy consumption impact information 4 such as driving information and environment information may be obtained by using the vehicle cloud. The user configuration is configuration information obtained through a user operation, for example, energy consumption impact information 5 such as a driving mode and an energy recovery mode.

Optionally, the cockpit vehicle control service obtains the energy consumption impact information 1 to 5 by using the production line, the VCU, the BCM, the vehicle cloud, and the user configuration, and the cockpit vehicle control service sends the obtained energy consumption impact information to the map app or the navigation app. The map app or the navigation app sends, to the map SDK, the destination or the traveling route input by the user, or an automatically obtained destination or traveling route, the current remaining energy, and the energy consumption impact information 1 to 5. The map SDK generates the road condition information based on the destination or the traveling route sent by the map app or the navigation app, then obtains the driving reference information through calculation based on the destination or the route information, the current remaining energy, the energy consumption impact information 1 to 5, and the road condition information, and returns the driving reference information to the map app or the navigation app. The map app or the navigation app receives the driving reference information returned by the map SDK and displays the driving reference information on the navigation interface.

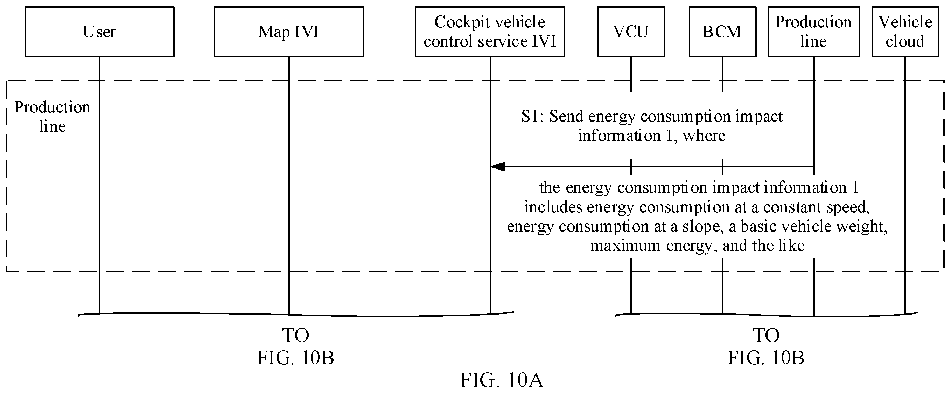

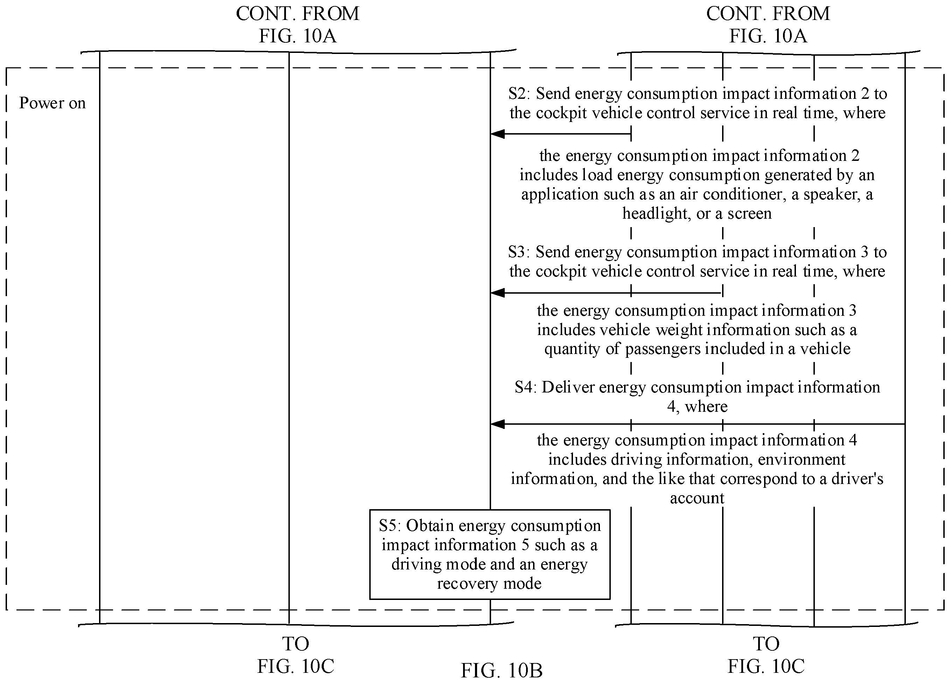

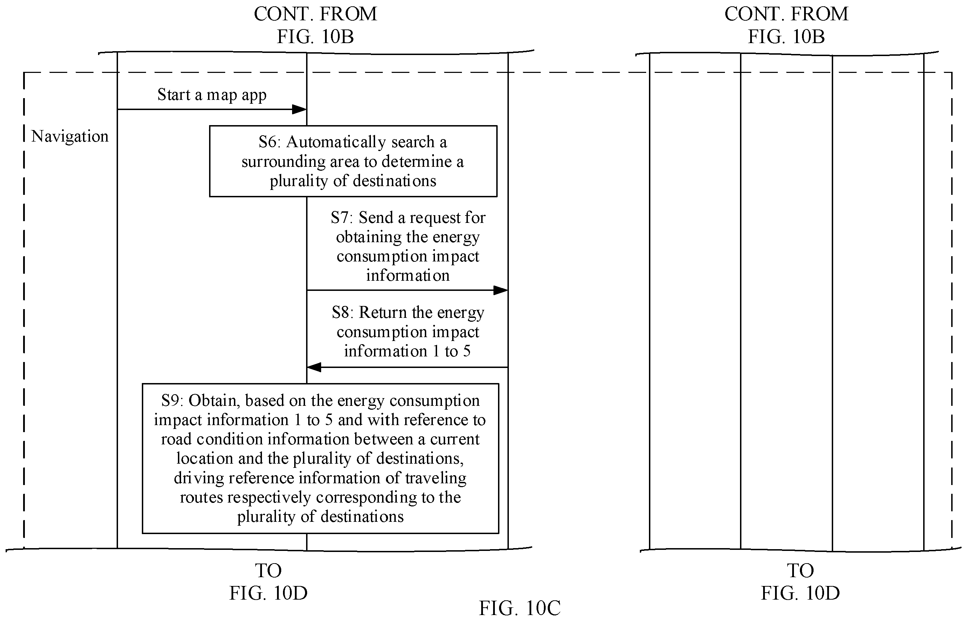

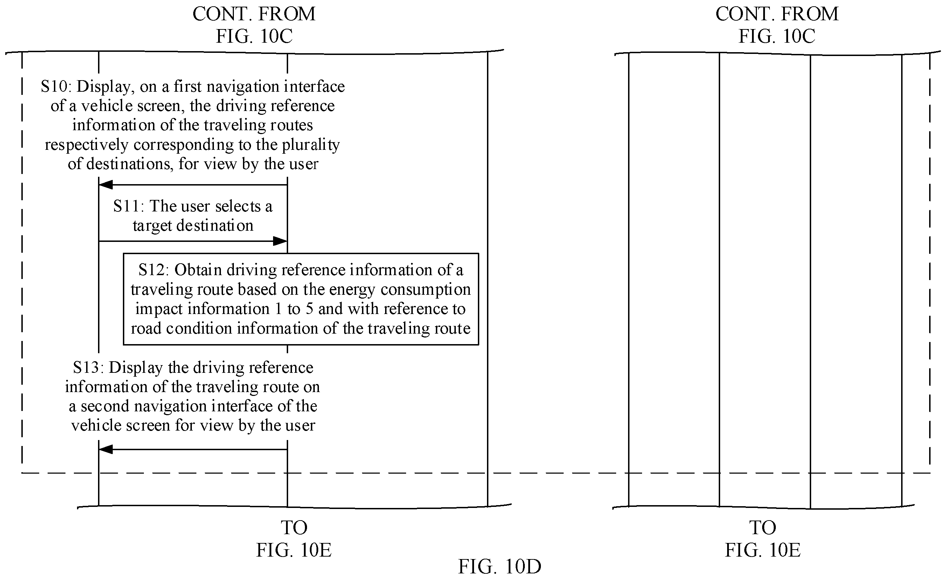

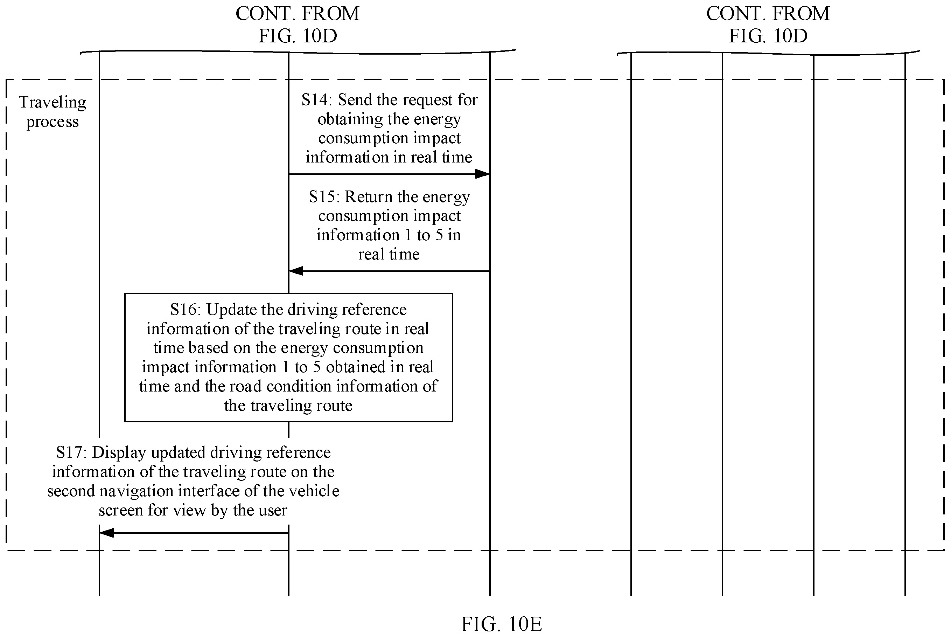

FIG. 10A, FIG. 10B, FIG. 10C, FIG. 10D, and FIG. 10E are an interworking diagram of a vehicle navigation method or a method for obtaining driving reference information according to an embodiment of this application. The vehicle navigation method or the method for obtaining driving reference information is applied to the system architecture shown in FIG. 9. As shown in FIG. 10A, FIG. 10B, FIG. 10C, FIG. 10D, and FIG. 10E, the method is implemented through interworking between a user and the map (including the map app and the map SDK) in the IVI, the cockpit vehicle control service in the IVI, the VCU, the BCM, the production line, the vehicle cloud, and the like that are shown in FIG. 9. The method may be divided into phases such as a production line, power on, navigation, and a traveling process. For example, the method includes but is not limited to the following step 1 to step 17.

The production line phase is when the vehicle is delivered.

Step 1: The production line sends energy consumption impact information 1 to the cockpit vehicle control service, where the energy consumption impact information 1 includes energy consumption at a constant speed, energy consumption at a slope, a basic vehicle weight, maximum energy, and the like.

The power-on phase is after the vehicle is started.

Step 2: The VCU sends energy consumption impact information 2 to the cockpit vehicle control service in real time, where the energy consumption impact information 2 includes load energy consumption generated by an application such as an air conditioner, a speaker, a headlight, or a screen.

Step 3: The BCM sends energy consumption impact information 3 to the cockpit vehicle control service in real time, where the energy consumption impact information 3 includes vehicle weight information such as a quantity of passengers included in the vehicle.

Step 4: The vehicle cloud delivers energy consumption impact information 4 to the cockpit vehicle control service, where the energy consumption impact information 4 includes driving information, environment information, and the like that correspond to a driver's account.

Step 5: The cockpit vehicle control service obtains energy consumption impact information 5 such as a driving mode and an energy recovery mode through historical user configuration or a user operation obtained in the power-on phase.

The navigation phase is after the user starts the map app or the navigation app.

Step 6: The map app or the navigation app automatically searches a surrounding area to determine a plurality of destinations.

Optionally, the plurality of destinations are a common destination corresponding to the user or a destination near a current location of the vehicle.

Step 7: The map app or the navigation app sends a request for obtaining the energy consumption impact information to the cockpit vehicle control service.

Step 8: The cockpit vehicle control service returns, to the map app or the navigation app, the energy consumption impact information 1, the energy consumption impact information 2, the energy consumption impact information 3, the energy consumption impact information 4, and the energy consumption impact information 5, namely, the energy consumption impact information 1 to 5.

Step 9: The map app or the navigation app obtains, based on the energy consumption impact information 1 to 5 and with reference to road condition information between the current location and the plurality of destinations, driving reference information of traveling routes respectively corresponding to the plurality of destinations.

Step 10: The map app or the navigation app displays the driving reference information of the traveling routes respectively corresponding to the plurality of destinations on a first navigation interface of a vehicle screen for view by the user.

Step 11: The user selects a target destination or a traveling route to the target destination.

Step 12: The map app or the navigation app obtains driving reference information of the traveling route based on the energy consumption impact information 1 to 5 and with reference to road condition information of the traveling route.

Step 13: The map app or the navigation app displays the driving reference information of the traveling route on a second navigation interface of the vehicle screen for view by the user.

The traveling process means that the vehicle is in a process of traveling based on the traveling route.

Step 14: The map app or the navigation app sends the request for obtaining the energy consumption impact information to the cockpit vehicle control service in real time.

Step 15: The cockpit vehicle control service returns in real time the energy consumption impact information 1 to 5 obtained in real time to the map app or the navigation app.

Step 16: The map app or the navigation app updates the driving reference information of the traveling route in real time based on the energy consumption impact information 1 to 5 obtained in real time and the road condition information of the traveling route.

Step 17: The map app or the navigation app displays updated driving reference information of the traveling route on the second navigation interface of the vehicle screen for view by the user.

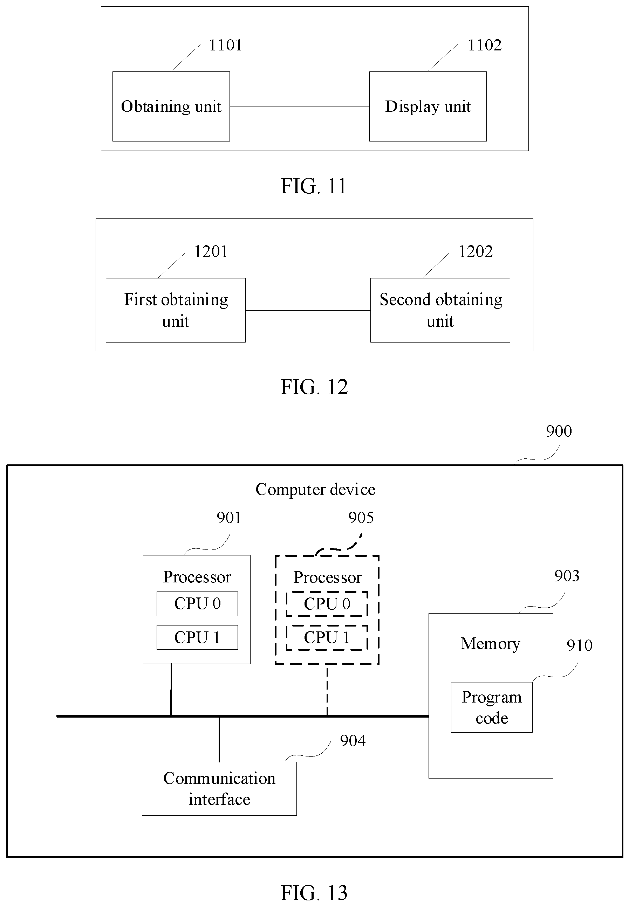

FIG. 11 is a diagram of a vehicle navigation apparatus according to an embodiment of this application. The vehicle navigation apparatus may be implemented as all or a part of a motor control module or a motor controller by using software, hardware, or a combination thereof. The vehicle navigation apparatus may include an obtaining unit 1101 and a display unit 1102.

The obtaining unit 1101 is configured to obtain a first traveling area of a vehicle. The first traveling area is determined by a first location set that corresponds to the vehicle and that meets a first energy requirement. The first energy requirement includes at least one of the following: a one-way trip is achievable upon depletion of current remaining energy, a one-way trip is achievable upon consumption of a first proportion range of the current remaining energy, a one-way trip is achievable upon consumption to a second proportion range of the current remaining energy, a one-way trip is achievable upon replenishment of first target energy, a round trip is achievable upon depletion of the current remaining energy, a round trip is achievable upon consumption of a third proportion range of the current remaining energy, a round trip is achievable upon consumption to a fourth proportion range of the remaining energy, or a round trip is achievable upon replenishment of second target energy.

The display unit 1102 is configured to display the first traveling area of the vehicle.

In a possible implementation, the obtaining unit 1101 is further configured to obtain a second traveling area of the vehicle. The second traveling area is determined by a second location set that corresponds to the vehicle and that meets a second energy requirement. The second energy requirement includes at least one of the following: a one-way trip is achievable upon depletion of the current remaining energy, a one-way trip is achievable upon consumption of the first proportion range of the current remaining energy, a one-way trip is achievable upon replenishment of the first target energy, a round trip is achievable upon depletion of the current remaining energy, a round trip is achievable upon consumption of the second proportion range of the current remaining energy, or a round trip is achievable upon replenishment of the second target energy. The second energy requirement is different from the first energy requirement.

The display unit 1102 is further configured to display the second traveling area.

In a possible implementation, display colors of the first traveling area and the second traveling area are different.

In a possible implementation, the display unit 1102 is further configured to display the first traveling area based on a trigger condition. The trigger condition includes at least one of the following: the current remaining energy is less than an energy threshold, a range corresponding to a current state of charge is less than a first range threshold, a remaining range of a navigation route corresponding to the vehicle is less than a second range threshold, a speed of the vehicle is less than a vehicle speed threshold, a user operation is performed, or a navigation application is started.

In a possible implementation, the display unit 1102 is further configured to display driving reference information of the vehicle and at least one of a navigation route of the vehicle from a current location to a destination or an energy replenishment station on the navigation route. The driving reference information includes at least one of the following: a traveling area of the vehicle, a result of whether the destination is reachable, a result of whether a round trip to the destination is achievable, remaining energy or a range available upon reaching the destination, or remaining energy or a range available upon achieving a round trip to the destination.

In a possible implementation, the display unit 1102 is further configured to display a location reached upon consumption of a fifth proportion range of the current remaining energy on the navigation route.

In a possible implementation, when the result of whether the destination is reachable included in the driving reference information indicates that the destination is unreachable, or the result of whether a round trip to the destination is achievable included in the driving reference information indicates that a round trip to the destination is unachievable, the display unit 1102 is further configured to display a location reached upon depletion of the current remaining energy on the navigation route.

In a possible implementation, the obtaining unit 1101 is configured to: obtain energy consumption impact information and the current remaining energy of the vehicle, where the energy consumption impact information includes at least one of driving information, vehicle weight information, and environment information; obtain, based on the energy consumption impact information and the current remaining energy, the first location set that corresponds to the vehicle and that meets the first energy requirement; and obtain the first traveling area of the vehicle by connecting a plurality of locations included in the first location set.

In a possible implementation, the energy consumption impact information includes the driving information. The obtaining unit 1101 is configured to: obtain driving information corresponding to a driver's account. The driving information corresponding to the driver's account is obtained based on statistical learning for a historical driving record corresponding to the driver's account. The historical driving record includes at least one of an acceleration, a deceleration, or a traveling speed. The traveling speed includes at least one of a straight speed or a turning speed.

In a possible implementation, the energy consumption impact information includes the vehicle weight information. The obtaining unit 1101 is configured to: obtain a quantity of passengers carried by the vehicle, and obtain a vehicle weight increment based on the quantity of passengers and a passenger reference weight; or obtain borne weights of all seats of the vehicle, and obtain a vehicle weight increment based on the borne weights of all the seats; or obtain a vehicle weight increment based on input weight information; and obtain the vehicle weight information based on the vehicle weight increment and an initial weight of the vehicle.

In a possible implementation, the energy consumption impact information includes the environment information. The environment information includes a heading direction and at least one of a wind direction and a wind strength. The obtaining unit 1101 is configured to: obtain information about a first location on a traveling route of the vehicle, where the first location is any location on the traveling route; and obtain at least one of the wind direction and the wind strength based on the information about the first location, and obtain a heading direction of the vehicle at the first location based on the traveling route.

In a possible implementation, the obtaining unit 1101 is configured to: obtain vehicle energy consumption of the vehicle based on the energy consumption impact information, where the vehicle energy consumption includes at least one of first vehicle energy consumption, second vehicle energy consumption, and third vehicle energy consumption, the first vehicle energy consumption is determined based on the driving information, the second vehicle energy consumption is determined based on the vehicle weight information, and the third vehicle energy consumption is determined based on the environment information; and obtain, based on the vehicle energy consumption and the current remaining energy of the vehicle, the first location set that corresponds to the vehicle and that meets the first energy requirement.

In a possible implementation, the vehicle energy consumption includes the first vehicle energy consumption, and the energy consumption impact information further includes at least one of a driving mode or an energy recovery mode configured for the vehicle. The obtaining unit 1101 is configured to: determine the first vehicle energy consumption of the vehicle based on the driving information and at least one of the driving mode and the energy recovery mode corresponding to the vehicle.

In a possible implementation, the vehicle energy consumption includes the second vehicle energy consumption. The obtaining unit is configured to: obtain a resistance of the vehicle based on the vehicle weight information, where the resistance of the vehicle includes at least one of a rolling resistance, a gradient resistance, a first air resistance, or an acceleration resistance; and determine the second vehicle energy consumption of the vehicle based on the resistance of the vehicle.

In a possible implementation, the vehicle energy consumption includes the third vehicle energy consumption. The obtaining unit 1101 is configured to: determine, based on the heading direction and at least one of the wind direction and the wind strength, a second air resistance corresponding to the vehicle; and determine the third vehicle energy consumption of the vehicle based on the second air resistance.

In a possible implementation, the obtaining unit 1101 is further configured to: obtain road condition information of traveling from the current location of the vehicle to the destination. The destination is a frequently used destination, a nearby destination, or an input target destination corresponding to the vehicle.

The obtaining unit is configured to: obtain, based on the energy consumption impact information, the current remaining energy, and the road condition information, the first location set that corresponds to the vehicle and that meets the first energy requirement.

In a possible implementation, the obtaining unit 1101 is further configured to: obtain energy consumption impact information and the current remaining energy of the vehicle, where the energy consumption impact information includes at least one of driving information, vehicle weight information, and environment information; and obtain the driving reference information of the vehicle based on the energy consumption impact information and the current remaining energy.

FIG. 12 is a diagram of an apparatus for obtaining driving reference information according to an embodiment of this application. The apparatus for obtaining driving reference information may be implemented as all or a part of a motor control module or a motor controller by using software, hardware, or a combination thereof. The apparatus for obtaining driving reference information may include a first obtaining unit 1201 and a second obtaining unit 1202.

The first obtaining unit 1201 is configured to obtain energy consumption impact information and current remaining energy of a vehicle. The energy consumption impact information includes at least one of driving information, vehicle weight information, and environment information.

The second obtaining unit 1202 is configured to obtain the driving reference information of the vehicle based on the energy consumption impact information and the current remaining energy. The driving reference information includes at least one of the following: a traveling area of the vehicle, a result of whether the destination is reachable, a result of whether a round trip to the destination is achievable, remaining energy or a range available upon reaching the destination, or remaining energy or a range available upon achieving a round trip to the destination.

In a possible implementation, the energy consumption impact information includes the driving information. The first obtaining unit 1201 is configured to: obtain driving information corresponding to a driver's account. The driving information corresponding to the driver's account is obtained based on statistical learning for a historical driving record corresponding to the driver's account. The historical driving record includes at least one of an acceleration, a deceleration, or a traveling speed. The traveling speed includes at least one of a straight speed or a turning speed.

In a possible implementation, the first obtaining unit 1201 is configured to: send the driver's account to a vehicle cloud server; and receive the driving information that corresponds to the driver's account and that is sent by the vehicle cloud server.

In a possible implementation, the energy consumption impact information includes the vehicle weight information. The first obtaining unit 1201 is configured to: obtain a quantity of passengers carried by the vehicle, and obtain a vehicle weight increment based on the quantity of passengers and a passenger reference weight; or obtain borne weights of all seats of the vehicle, and obtain a vehicle weight increment based on the borne weights of all the seats; or obtain a vehicle weight increment based on input weight information; and obtain the vehicle weight information based on the vehicle weight increment and an initial weight of the vehicle.

In a possible implementation, the energy consumption impact information includes the environment information. The environment information includes a heading direction and at least one of a wind direction and a wind strength. The first obtaining unit 1201 is configured to: obtain information about a first location on a traveling route of the vehicle, where the first location is any location on the traveling route; and obtain at least one of the wind direction and the wind strength based on the information about the first location, and obtain a heading direction of the vehicle at the first location based on the traveling route.

In a possible implementation, the second obtaining unit 1202 is configured to: obtain vehicle energy consumption of the vehicle based on the energy consumption impact information, where the vehicle energy consumption includes at least one of first vehicle energy consumption, second vehicle energy consumption, and third vehicle energy consumption, the first vehicle energy consumption is determined based on the driving information, the second vehicle energy consumption is determined based on the vehicle weight information, and the third vehicle energy consumption is determined based on the environment information; and obtain the driving reference information of the vehicle based on the vehicle energy consumption and the current remaining energy of the vehicle.

In a possible implementation, the vehicle energy consumption includes the first vehicle energy consumption, and the energy consumption impact information further includes at least one of a driving mode or an energy recovery mode configured for the vehicle. The second obtaining unit 1202 is configured to: determine the first vehicle energy consumption of the vehicle based on the driving information and at least one of the driving mode and the energy recovery mode corresponding to the vehicle.

In a possible implementation, the vehicle energy consumption includes the second vehicle energy consumption. The second obtaining unit 1202 is configured to: obtain a resistance of the vehicle based on the vehicle weight information, where the resistance of the vehicle includes at least one of a rolling resistance, a gradient resistance, a first air resistance, or an acceleration resistance; and determine the second vehicle energy consumption of the vehicle based on the resistance of the vehicle.

In a possible implementation, the vehicle energy consumption includes the third vehicle energy consumption. The second obtaining unit 1202 is configured to: determine, based on the heading direction and at least one of the wind direction and the wind strength, a second air resistance corresponding to the vehicle; and determine the third vehicle energy consumption of the vehicle based on the second air resistance.

In a possible implementation, the first obtaining unit 1201 is further configured to: obtain road condition information of traveling from the current location of the vehicle to the destination. The destination is a frequently used destination, a nearby destination, or an input target destination corresponding to the vehicle.

The second obtaining unit 1202 is configured to: obtain the driving reference information of the vehicle based on the energy consumption impact information, the current remaining energy, and the road condition information.

In a possible implementation, the driving reference information includes a first traveling area of the vehicle. The second obtaining unit 1202 is configured to: obtain, based on the energy consumption impact information and the current remaining energy, the first location set that corresponds to the vehicle and that meets the first energy requirement; and obtain the first traveling area by connecting a plurality of locations included in the first location set.

In a possible implementation, the first energy requirement includes at least one of the following: a one-way trip is achievable upon depletion of the current remaining energy, a one-way trip is achievable upon consumption of a first proportion range of the current remaining energy, a one-way trip is achievable upon consumption to a second proportion range of the current remaining energy, a one-way trip is achievable upon replenishment of first target energy, a round trip is achievable upon depletion of the current remaining energy, a round trip is achievable upon consumption of a third proportion range of the current remaining energy, a round trip is achievable upon consumption to a fourth proportion range of the remaining energy, or a round trip is achievable upon replenishment of second target energy.

In a possible implementation, the apparatus further includes a display unit, configured to display the first traveling area of the vehicle.

In a possible implementation, the driving reference information further includes a second traveling area of the vehicle. The second traveling area is determined by a second location set that corresponds to the vehicle and that meets a second energy requirement. The second energy requirement includes at least one of the following: a one-way trip is achievable upon depletion of the current remaining energy, a one-way trip is achievable upon consumption of the first proportion range of the current remaining energy, a one-way trip is achievable upon replenishment of the first target energy, a round trip is achievable upon depletion of the current remaining energy, a round trip is achievable upon consumption of the second proportion range of the current remaining energy, or a round trip is achievable upon replenishment of the second target energy. The second energy requirement is different from the first energy requirement.

The display unit is further configured to display the second traveling area.

In a possible implementation, display colors of the first traveling area and the second traveling area are different.

In a possible implementation, the display unit is configured to: display the first traveling area of the vehicle based on a trigger condition. The trigger condition includes at least one of the following: the current remaining energy is less than an energy threshold, a range corresponding to a current state of charge is less than a range threshold, a remaining range of a navigation route corresponding to the vehicle is less than the range threshold, a speed of the vehicle is less than a vehicle speed threshold, a user operation is performed, or a navigation application is started.

In a possible implementation, the display unit is further configured to display driving reference information and at least one of a navigation route of the vehicle from a current location to a destination or an energy replenishment station on the navigation route.

In a possible implementation, the display unit is further configured to display a location reached upon consumption of a fifth proportion range of the current remaining energy on the navigation route.

In a possible implementation, when the result of whether the destination is reachable included in the driving reference information indicates that the destination is unreachable, or the result of whether a round trip to the destination is achievable included in the driving reference information indicates that a round trip to the destination is unachievable, the display unit is further configured to display a location reached upon depletion of the current remaining energy on the navigation route.

An embodiment of this application provides another apparatus for obtaining driving reference information. The apparatus for obtaining driving reference information may be implemented as all or a part of a motor control module or a motor controller by using software, hardware, or a combination thereof. The apparatus for obtaining driving reference information may include: a receiving unit, an obtaining unit, and a sending unit.

The receiving unit is configured to receive a driver's account sent by a vehicle.

The obtaining unit is configured to obtain driving information corresponding to the driver's account based on statistical learning for a historical driving record corresponding to the driver's account. The historical driving record includes at least one of an acceleration, a deceleration, or a traveling speed, and the traveling speed includes at least one of a straight speed or a turning speed.

The sending unit is configured to send the driving information corresponding to the driver's account to the vehicle.

It should be noted that, when the vehicle navigation apparatus or the apparatus for obtaining driving reference information provided in the foregoing embodiments works, division of the foregoing functional units is merely used as an example for description. During actual application, the foregoing functions may be allocated to different functional units for implementation as required. That is, an internal structure of the device is divided into different functional units, to implement all or some of the foregoing functions. In addition, the vehicle navigation apparatus provided in the foregoing embodiment and the method embodiment of the vehicle navigation apparatus belong to a same concept. The apparatus for obtaining driving reference information provided in the foregoing embodiment and the method embodiment for obtaining driving reference information belong to a same concept. For a specific implementation process, refer to the method embodiment. Details are not described herein again.

The foregoing descriptions of procedures corresponding to accompanying drawings have respective focuses. For a part of a procedure that is not described in detail, refer to related descriptions of another procedure.

An embodiment of this application further provides a vehicle. The vehicle includes the vehicle navigation apparatus shown in FIG. 11, or the vehicle includes the apparatus for obtaining driving reference information shown in FIG. 12.

FIG. 13 is a diagram of a structure of a computer device 900 according to an example embodiment of this application. The computer device 900 shown in FIG. 13 is configured to perform operations related to the vehicle navigation method shown in FIG. 2 or operations related to the method for obtaining driving reference information shown in FIG. 8. The device 900 for obtaining driving reference information may include the foregoing motor control module or the foregoing motor controller. The device 900 for obtaining driving reference information may be implemented by using a general bus architecture.

As shown in FIG. 13, the computer device 900 includes at least one processor 901, a memory 903, and at least one communications interface 904.

The processor 901 is, for example, a general-purpose central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 901 includes an application-specific integrated circuit (application-specific integrated circuit, ASIC), a programmable logic device (programmable logic device, PLD) or another programmable logic device, a transistor logic device, a hardware component, or any combination thereof. The PLD is, for example, a complex programmable logic device (complex programmable logic device, CPLD), a field-programmable gate array (field-programmable gate array, FPGA), generic array logic (generic array logic, GAL), or any combination thereof. The processor may implement or execute various logical blocks, modules, and circuits described with reference to the content disclosed in embodiments of the present invention. Alternatively, the processor may be a combination of processors implementing a computing function, for example, a combination of one or more microprocessors, or a combination of a DSP and a microprocessor.

Optionally, the device 900 for obtaining driving reference information further includes a bus. The bus is configured to transmit information between components of the device 900 for obtaining driving reference information. The bus may be a peripheral component interconnect (peripheral component interconnect, PCI for short) bus, an extended industry standard architecture (extended industry standard architecture, EISA for short) bus, or the like. The bus may include an address bus, a data bus, a control bus, and the like. For ease of representation, only one bold line is used to represent the bus in FIG. 13, but this does not mean that there is only one bus or only one type of bus.

The memory 903 is, for example, a read-only memory (read-only memory, ROM) or another type of static storage device that can store static information and instructions, a random access memory (random access memory, RAM) or another type of dynamic storage device that can store information and instructions, or an electrically erasable programmable read-only memory (electrically erasable programmable read-only Memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, the memory 903 is not limited thereto. For example, the memory 903 exists independently, and is connected to the processor 901 through the bus. Alternatively, the memory 903 and the processor 901 may be integrated together.

The communication interface 904 uses any apparatus such as a transceiver, and is configured to communicate with another device or a communication network. The communication network may be an Ethernet, a radio access network (RAN), a Bluetooth network, or the like. The communication interface 904 may include a wired communication interface, and may further include a wireless communication interface. In this embodiment of this application, the communication interface 904 may be used by the device 900 for obtaining driving reference information to communicate with another device.

During specific implementation, in an embodiment, the processor 901 may include one or more CPUs, for example, a CPU 0 and a CPU 1 shown in FIG. 13. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the computer device 900 includes a plurality of processors, for example, the processor 901 and a processor 905 shown in FIG. 13. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the computer device 900 may further include an output device and an input device. The output device communicates with the processor 901, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, a projector (projector), or the like. The input device communicates with the processor 901, and may receive an input from a user in a plurality of manners. For example, the input device may be a touchscreen device, a sensing device, or the like.

In some embodiments, the memory 903 is configured to store program code 910 for executing the solutions of this application, and the processor 901 may execute the program code 910 stored in the memory 903. That is, the device 900 for obtaining driving reference information may implement, by using the processor 901 and the program code 910 in the memory 903, the method for obtaining driving reference information provided in the method embodiments. The program code 910 may include one or more software modules. Optionally, the processor 901 may alternatively store program code or instructions for executing the solutions of this application.

In a specific embodiment, the computer device 900 in this embodiment of this application may correspond to the motor control module or the motor controller in the foregoing method embodiments. The processor 901 in the computer device 900 reads instructions in the memory 903, so that the computer device 900 shown in FIG. 13 can perform all or some of operations performed by the motor control module or the motor controller.

Specifically, the processor 901 is configured to obtain a first traveling area of the vehicle, and display the first traveling area of the vehicle. The first traveling area of the vehicle is determined by a first location set that corresponds to the vehicle and that meets a first energy requirement. The first energy requirement includes at least one of the following: a one-way trip is achievable upon depletion of current remaining energy, a one-way trip is achievable upon consumption of a first proportion range of the current remaining energy, a one-way trip is achievable upon consumption to a second proportion range of the current remaining energy, a one-way trip is achievable upon replenishment of first target energy, a round trip is achievable upon depletion of the current remaining energy, a round trip is achievable upon consumption of a third proportion range of the current remaining energy, a round trip is achievable upon consumption to a fourth proportion range of the remaining energy, or a round trip is achievable upon replenishment of second target energy.

Alternatively, the processor 901 is configured to: obtain energy consumption impact information and the current remaining energy of the vehicle, where the energy consumption impact information includes at least one of driving information, vehicle weight information, and environment information; and obtain driving reference information of the vehicle based on the energy consumption impact information and the current remaining energy, where the driving reference information includes at least one of the following: a traveling area of the vehicle, a result of whether the destination is reachable, a result of whether a round trip to the destination is achievable, remaining energy or a range available upon reaching the destination, or remaining energy or a range available upon achieving a round trip to the destination.

For brevity, another optional implementation is not described herein again.

The computer device 900 may further correspond to the vehicle navigation apparatus shown in FIG. 10A, FIG. 10B, FIG. 10C, FIG. 10D, and FIG. 10E or the apparatus for obtaining driving reference information shown in FIG. 11. Each functional module in the vehicle navigation apparatus or each functional module in the apparatus for obtaining driving reference information is implemented by using software of the device 900 for obtaining driving reference information. In other words, the functional modules included in the vehicle navigation apparatus or the apparatus for obtaining driving reference information are generated after the processor 901 of the device 900 for obtaining driving reference information reads the program code 910 stored in the memory 903.

Steps of the vehicle navigation method shown in FIG. 2 and the method for obtaining driving reference information shown in FIG. 8 are completed by using a hardware integrated logic circuit in the processor of the computer device 900 or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware in the processor. To avoid repetition, details are not described herein again.

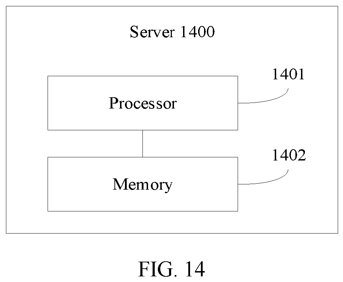

FIG. 14 is a diagram of a structure of a server according to an embodiment of this application. The server may vary greatly due to different configurations or performance, and may include one or more processors 1401 and one or more memories 1402. The one or more memories 1402 store at least one computer program, and the at least one computer program is loaded and executed by the one or more processors 1401, so that the server implements the method performed by a vehicle cloud server in obtaining driving reference information provided in the foregoing method embodiments. Certainly, the server may further have components such as a wired or wireless network interface, a keyboard, and an input/output interface, to perform input/output. The server may further include another component configured to implement a function of the device. Details are not described herein.

An embodiment of this application further provides a chip, including an input interface, an output interface, a processor, and a memory. The input interface, the output interface, the processor, and the memory are connected by using an internal connection path. The processor is configured to execute code in the memory. When the code is executed, the processor is configured to perform either of the vehicle navigation method and the method for obtaining driving reference information.

It should be understood that the processor may be a CPU, or may be another general-purpose processor, a DSP, an ASIC, an FPGA, or another programmable logic device, a discrete gate or a transistor logic device, a discrete hardware component, or the like. The general-purpose processor may be a microprocessor or any conventional processor or the like. It should be noted that the processor may be a processor that supports an ARM architecture.

Further, in an optional embodiment, there are one or more processors and one or more memories. Optionally, the memory may be integrated with the processor, or the memory and the processor are separately disposed. The memory may include a read-only memory and a random access memory, and provide instructions and data to the processor. The memory may further include a non-volatile random access memory. For example, the memory may further store a reference block and a target block.

The memory may be a volatile memory or a non-volatile memory, or may include both a volatile memory and a non-volatile memory. The non-volatile memory may be a ROM, a PROM, an EPROM, an EEPROM, or a flash memory. The volatile memory may be a RAM, and serves as an external cache. By way of example but not limitation, many forms of RAMs are available, for example, an SRAM, a DRAM, an SDRAM, a DDR SDRAM, an ESDRAM, an SLDRAM, and a DR RAM.

An embodiment of this application further provides a computer-readable storage medium. The computer-readable storage medium stores computer instructions. When the computer instructions stored in the computer-readable storage medium are executed by a computer device, the computer device is enabled to perform the vehicle navigation method or the method for obtaining driving reference information provided above.

An embodiment of this application further provides a computer program product including instructions. When the computer program product is run on a computer device, the computer device is enabled to perform the vehicle navigation method or the method for obtaining driving reference information provided above.

All or some of the foregoing embodiments may be implemented by using software, hardware, firmware, or any combination thereof. When software is used to implement embodiments, embodiments may be implemented completely or partially in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A vehicle navigation method, wherein the method comprises:
obtaining a first traveling area of a vehicle, wherein the first traveling area is determined by a first location set that corresponds to the vehicle and that meets a first energy requirement; and the first energy requirement comprises at least one of the following: a one-way trip is achievable upon depletion of current remaining energy, a one-way trip is achievable upon consumption of a first proportion range of the current remaining energy, a one-way trip is achievable upon consumption to a second proportion range of the current remaining energy, a one-way trip is achievable upon replenishment of first target energy, a round trip is achievable upon depletion of the current remaining energy, a round trip is achievable upon consumption of a third proportion range of the current remaining energy, a round trip is achievable upon consumption to a fourth proportion range of the remaining energy, or a round trip is achievable upon replenishment of second target energy; and
displaying the first traveling area of the vehicle.

2. The method according to claim **1,** wherein the method further comprises:
obtaining a second traveling area of the vehicle, wherein the second traveling area is determined by a second location set that corresponds to the vehicle and that meets a second energy requirement; the second energy requirement comprises at least one of the following: a one-way trip is achievable upon depletion of the current remaining energy, a one-way trip is achievable upon consumption of the first proportion range of the current remaining energy, a one-way trip is achievable upon replenishment of the first target energy, a round trip is achievable upon depletion of the current remaining energy, a round trip is achievable upon consumption of the second proportion range of the current remaining energy, or a round trip is achievable upon replenishment of the second target energy; and the second energy requirement is different from the first energy requirement; and
displaying the second traveling area.

3. The method according to claim 2, wherein display colors of the first traveling area and the second traveling area are different.

4. The method according to any one of claims 1 to 3, wherein the method further comprises:
displaying the first traveling area based on a trigger condition, wherein the trigger condition comprises at least one of the following: the current remaining energy is less than an energy threshold, a range corresponding to a current state of charge is less than a first range threshold, a remaining range of a navigation route corresponding to the vehicle is less than a second range threshold, a speed of the vehicle is less than a vehicle speed threshold, a user operation is performed, or a navigation application is started.

5. The method according to claim 4, wherein the method further comprises:
displaying driving reference information of the vehicle and at least one of a navigation route of the vehicle from a current location to a destination or an energy replenishment station on the navigation route, wherein
the driving reference information comprises at least one of the following: a traveling area of the vehicle, a result of whether the destination is reachable, a result of whether a round trip to the destination is achievable, remaining energy or a range available upon reaching the destination, or remaining energy or a range available upon achieving a round trip to the destination.

6. The method according to claim 5, wherein the method further comprises:
displaying a location reached upon consumption of a fifth proportion range of the current remaining energy on the navigation route.

7. The method according to claim 5 or 6, wherein the result of whether the destination is reachable comprised in the driving reference information indicates that the destination is unreachable, or the result of whether a round trip to the destination is achievable comprised in the driving reference information indicates that a round trip to the destination is unachievable, and the method further comprises:
displaying a location reached upon depletion of the current remaining energy on the navigation route.

8. The method according to any one of claims 1 to 7, wherein the obtaining a first traveling area of a vehicle comprises:
obtaining energy consumption impact information and the current remaining energy of the vehicle, wherein the energy consumption impact information comprises at least one of driving information, vehicle weight information, and environment information;
obtaining, based on the energy consumption impact information and the current remaining energy, the first location set that corresponds to the vehicle and that meets the first energy requirement; and
obtaining the first traveling area of the vehicle by connecting a plurality of locations comprised in the first location set.

9. The method according to claim 8, wherein the energy consumption impact information comprises the driving information; and the obtaining energy consumption impact information of the vehicle comprises:
obtaining driving information corresponding to a driver's account, wherein the driving information corresponding to the driver's account is obtained based on statistical learning for a historical driving record corresponding to the driver's account, the historical driving record comprises at least one of an acceleration, a deceleration, or a traveling speed, and the traveling speed comprises at least one of a straight speed or a turning speed.

10. The method according to claim 8, wherein the energy consumption impact information comprises the vehicle weight information, and the obtaining energy consumption impact information of the vehicle comprises:
obtaining a quantity of passengers carried by the vehicle, and obtaining a vehicle weight increment based on the quantity of passengers and a passenger reference weight; or obtaining borne weights of all seats of the vehicle, and obtaining a vehicle weight increment based on the borne weights of all the seats; or obtaining a vehicle weight increment based on input weight information; and
obtaining the vehicle weight information based on the vehicle weight increment and an initial weight of the vehicle.

11. The method according to claim 8, wherein the energy consumption impact information comprises the environment information, and the environment information comprises a heading direction and at least one of a wind direction and a wind strength; and the obtaining energy consumption impact information of the vehicle comprises:
obtaining information about a first location on a traveling route of the vehicle, wherein the first location is any location on the traveling route; and
obtaining at least one of the wind direction and the wind strength based on the information about the first location, and obtaining a heading direction of the vehicle at the first location based on the traveling route.

12. The method according to any one of claims 8 to 11, wherein the obtaining, based on the energy consumption impact information and the current remaining energy, the first location set that corresponds to the vehicle and that meets the first energy requirement comprises:
obtaining vehicle energy consumption of the vehicle based on the energy consumption impact information, wherein the vehicle energy consumption comprises at least one of first vehicle energy consumption, second vehicle energy consumption, and third vehicle energy consumption, the first vehicle energy consumption is determined based on the driving information, the second vehicle energy consumption is determined based on the vehicle weight information, and the third vehicle energy consumption is determined based on the environment information; and
obtaining, based on the vehicle energy consumption and the current remaining energy of the vehicle, the first location set that corresponds to the vehicle and that meets the first energy requirement.

13. The method according to claim 12, wherein the vehicle energy consumption comprises the first vehicle energy consumption, the energy consumption impact information further comprises at least one of a driving mode or an energy recovery mode configured for the vehicle, and the obtaining vehicle energy consumption of the vehicle based on the energy consumption impact information comprises:
determining the first vehicle energy consumption of the vehicle based on the driving information and at least one of the driving mode and the energy recovery mode corresponding to the vehicle.

14. The method according to claim 12, wherein the vehicle energy consumption comprises the second vehicle energy consumption, and the obtaining vehicle energy consumption of the vehicle based on the energy consumption impact information comprises:
obtaining a resistance of the vehicle based on the vehicle weight information, wherein the resistance of the vehicle comprises at least one of a rolling resistance, a gradient resistance, a first air resistance, or an acceleration resistance; and
determining the second vehicle energy consumption of the vehicle based on the resistance of the vehicle.

15. The method according to claim 12, wherein the vehicle energy consumption comprises the third vehicle energy consumption, and the obtaining vehicle energy consumption of the vehicle based on the energy consumption impact information comprises:
determining, based on the heading direction and at least one of the wind direction and the wind strength, a second air resistance corresponding to the vehicle; and
determining the third vehicle energy consumption of the vehicle based on the second air resistance.

16. The method according to any one of claims 8 to 15, wherein the method further comprises:
obtaining road condition information of traveling from the current location of the vehicle to the destination, wherein the destination is a frequently used destination, a nearby destination, or an input target destination corresponding to the vehicle; and
the obtaining the driving reference information of the vehicle based on the energy consumption impact information and the current remaining energy comprises:
obtaining, based on the energy consumption impact information, the current remaining energy, and the road condition information, the first location set that corresponds to the vehicle and that meets the first energy requirement.

17. The method according to any one of claims 5 to 7, wherein the method further comprises:
obtaining energy consumption impact information and the current remaining energy of the vehicle, wherein the energy consumption impact information comprises at least one of driving information, vehicle weight information, and environment information; and
obtaining the driving reference information of the vehicle based on the energy consumption impact information and the current remaining energy.

18. A method for obtaining driving reference information, wherein the method comprises:
obtaining energy consumption impact information and current remaining energy of a vehicle, wherein the energy consumption impact information comprises at least one of driving information, vehicle weight information, and environment information; and
obtaining driving reference information of the vehicle based on the energy consumption impact information and the current remaining energy, wherein the driving reference information comprises at least one of the following: a traveling area of the vehicle, a result of whether a destination is reachable, a result of whether a round trip to the destination is achievable, remaining energy or a range available upon reaching the destination, or remaining energy or a range available upon achieving a round trip to the destination.

19. The method according to claim 18, wherein the energy consumption impact information comprises the driving information; and the obtaining energy consumption impact information of a vehicle comprises:
obtaining driving information corresponding to a driver's account, wherein the driving information corresponding to the driver's account is obtained based on statistical learning for a historical driving record corresponding to the driver's account, the historical driving record comprises at least one of an acceleration, a deceleration, or a traveling speed, and the traveling speed comprises at least one of a straight speed or a turning speed.

20. The method according to claim 19, wherein the obtaining driving information corresponding to a driver's account comprises:
sending the driver's account to a vehicle cloud server; and
receiving the driving information that corresponds to the driver's account and that is sent by the vehicle cloud server.

21. The method according to claim 18, wherein the energy consumption impact information comprises the vehicle weight information, and the obtaining energy consumption impact information of a vehicle comprises:
obtaining a quantity of passengers carried by the vehicle, and obtaining a vehicle weight increment based on the quantity of passengers and a passenger reference weight; or obtaining borne weights of all seats of the vehicle, and obtaining a vehicle weight increment based on the borne weights of all the seats; or obtaining a vehicle weight increment based on input weight information; and
obtaining the vehicle weight information based on the vehicle weight increment and an initial weight of the vehicle.

22. The method according to claim 18, wherein the energy consumption impact information comprises the environment information, and the environment information comprises a heading direction and at least one of a wind direction and a wind strength; and the obtaining energy consumption impact information of a vehicle comprises:
obtaining information about a first location on a traveling route of the vehicle, wherein the first location is any location on the traveling route; and
obtaining at least one of the wind direction and the wind strength based on the information about the first location, and obtaining a heading direction of the vehicle at the first location based on the traveling route.

23. The method according to any one of claims 18 to 22, wherein the obtaining driving reference information of the vehicle based on the energy consumption impact information and the current remaining energy comprises:
obtaining vehicle energy consumption of the vehicle based on the energy consumption impact information, wherein the vehicle energy consumption comprises at least one of first vehicle energy consumption, second vehicle energy consumption, and third vehicle energy consumption, the first vehicle energy consumption is determined based on the driving information, the second vehicle energy consumption is determined based on the vehicle weight information, and the third vehicle energy consumption is determined based on the environment information; and
obtaining the driving reference information of the vehicle based on the vehicle energy consumption and the current remaining energy of the vehicle.

24. The method according to claim 23, wherein the vehicle energy consumption comprises the first vehicle energy consumption, the energy consumption impact information further comprises at least one of a driving mode or an energy recovery mode configured for the vehicle, and the obtaining vehicle energy consumption of the vehicle based on the energy consumption impact information comprises:
determining the first vehicle energy consumption of the vehicle based on the driving information and at least one of the driving mode and the energy recovery mode corresponding to the vehicle.

25. The method according to claim 23, wherein the vehicle energy consumption comprises the second vehicle energy consumption, and the obtaining vehicle energy consumption of the vehicle based on the energy consumption impact information comprises:
obtaining a resistance of the vehicle based on the vehicle weight information, wherein the resistance of the vehicle comprises at least one of a rolling resistance, a gradient resistance, a first air resistance, or an acceleration resistance; and
determining the second vehicle energy consumption of the vehicle based on the resistance of the vehicle.

26. The method according to claim 23, wherein the vehicle energy consumption comprises the third vehicle energy consumption, and the obtaining vehicle energy consumption of the vehicle based on the energy consumption impact information comprises:
determining, based on the heading direction and at least one of the wind direction and the wind strength, a second air resistance corresponding to the vehicle; and
determining the third vehicle energy consumption of the vehicle based on the second air resistance.

27. The method according to any one of claims 18 to 26, wherein the method further comprises:
obtaining road condition information of traveling from a current location of the vehicle to the destination, wherein the destination is a frequently used destination, a nearby destination, or an input target destination corresponding to the vehicle; and
the obtaining driving reference information of the vehicle based on the energy consumption impact information and the current remaining energy comprises:
obtaining the driving reference information of the vehicle based on the energy consumption impact information, the current remaining energy, and the road condition information.

28. The method according to any one of claims 18 to 27, wherein the driving reference information comprises a first traveling area of the vehicle, and the obtaining driving reference information of the vehicle based on the energy consumption impact information and the current remaining energy comprises:
obtaining, based on the energy consumption impact information and the current remaining energy, a first location set that corresponds to the vehicle and that meets a first energy requirement; and
obtaining the first traveling area by connecting a plurality of locations comprised in the first location set.

29. The method according to claim 28, wherein the first energy requirement comprises at least one of the following: a one-way trip is achievable upon depletion of the current remaining energy, a one-way trip is achievable upon consumption of a first proportion range of the current remaining energy, a one-way trip is achievable upon consumption to a second proportion range of the current remaining energy, a one-way trip is achievable upon replenishment of first target energy, a round trip is achievable upon depletion of the current remaining energy, a round trip is achievable upon consumption of a third proportion range of the current remaining energy, a round trip is achievable upon consumption to a fourth proportion range of the remaining energy, or a round trip is achievable upon replenishment of second target energy.

30. The method according to any one of claims 18 to 29, wherein after the obtaining driving reference information of the vehicle based on the energy consumption impact information and the current remaining energy, the method further comprises:
displaying the first traveling area of the vehicle.

31. The method according to claim 30, wherein the driving reference information comprises a second traveling area of the vehicle; the second traveling area is determined by a second location set that corresponds to the vehicle and that meets a second energy requirement; the second energy requirement comprises at least one of the following: a one-way trip is achievable upon depletion of the current remaining energy, a one-way trip is achievable upon consumption of the first proportion range of the current remaining energy, a one-way trip is achievable upon replenishment of the first target energy, a round trip is achievable upon depletion of the current remaining energy, a round trip is achievable upon consumption of the second proportion range of the current remaining energy, or a round trip is achievable upon replenishment of the second target energy; the second energy requirement is different from the first energy requirement; and the method further comprises:
displaying the second traveling area of the vehicle.

32. The method according to claim 31, wherein display colors of the first traveling area and the second traveling area are different.

33. The method according to any one of claims 30 to 32, wherein the displaying the first traveling area of the vehicle comprises:
displaying the first traveling area of the vehicle based on a trigger condition, wherein the trigger condition comprises at least one of the following: the current remaining energy is less than an energy threshold, a range corresponding to a current state of charge is less than a first range threshold, a remaining range of a navigation route corresponding to the vehicle is less than a second range threshold, a speed of the vehicle is less than a vehicle speed threshold, a user operation is performed, or a navigation application is started.

34. The method according to any one of claims 18 to 33, wherein the method further comprises:
displaying the driving reference information and at least one of a navigation route of the vehicle from the current location to the destination or an energy replenishment station on the navigation route.

35. The method according to claim 34, wherein the method further comprises:
displaying a location reached upon consumption of a fifth proportion range of the current remaining energy on the navigation route.

36. The method according to claim 34 or 35, wherein the result of whether the destination is reachable comprised in the driving reference information indicates that the destination is unreachable, or the result of whether a round trip to the destination is achievable comprised in the driving reference information indicates that a round trip to the destination is unachievable, and the method further comprises:
displaying a location reached upon depletion of the current remaining energy on the navigation route.

37. A method for obtaining driving reference information, wherein the method comprises:
receiving a driver's account sent by a vehicle;
obtaining driving information corresponding to the driver's account based on statistical learning for a historical driving record corresponding to the driver's account, wherein the historical driving record comprises at least one of an acceleration, a deceleration, or a traveling speed, and the traveling speed comprises at least one of a straight speed or a turning speed; and
sending the driving information corresponding to the driver's account to the vehicle.

38. A vehicle navigation apparatus, wherein the apparatus comprises:
an obtaining unit, configured to obtain a first traveling area of a vehicle, wherein the first traveling area is determined by a first location set that corresponds to the vehicle and that meets a first energy requirement; and the first energy requirement comprises at least one of the following: a one-way trip is achievable upon depletion of current remaining energy, a one-way trip is achievable upon consumption of a first proportion range of the current remaining energy, a one-way trip is achievable upon consumption to a second proportion range of the current remaining energy, a one-way trip is achievable upon replenishment of first target energy, a round trip is achievable upon depletion of the current remaining energy, a round trip is achievable upon consumption of a third proportion range of the current remaining energy, a round trip is achievable upon consumption to a fourth proportion range of the remaining energy, or a round trip is achievable upon replenishment of second target energy; and
a display unit, configured to display the first traveling area of the vehicle.

39. An apparatus for obtaining driving reference information, wherein the apparatus comprises:
a first obtaining unit, configured to obtain energy consumption impact information and current remaining energy of a vehicle, wherein the energy consumption impact information comprises at least one of driving information, vehicle weight information, and environment information; and
a second obtaining unit, configured to obtain driving reference information of the vehicle based on the energy consumption impact information and the current remaining energy, wherein the driving reference information comprises at least one of the following: a traveling area of the vehicle, a result of whether the destination is reachable, a result of whether a round trip to the destination is achievable, remaining energy or a range available upon reaching the destination, or remaining energy or a range available upon achieving a round trip to the destination.

40. A vehicle, wherein the vehicle comprises the vehicle navigation apparatus according to claim 38, or the vehicle comprises the apparatus for obtaining driving reference information according to claim 39.

41. A computer device, wherein the computer device comprises a processor and a memory, the memory stores at least one computer program or instructions, and the at least one computer program or instructions are loaded and executed by the processor, so that the computer device executes instructions for implementing the method according to any one of claims 1 to 17, or instructions for implementing the method according to any one of claims 18 to 36.

42. A computer-readable storage medium, wherein the computer-readable storage medium is configured to store program code executed by a processor, and the program code comprises instructions for implementing the method according to any one of claims 1 to 17, or instructions for implementing the method according to any one of claims 18 to 36, or instructions for implementing the method according to claim 37.
